(19) Europäisches Patentamt
European Patent Office
Office européen des brevets

(11) **EP 4 557 838 A1**

(12) **EUROPEAN PATENT APPLICATION**
published in accordance with Art. 153(4) EPC

(43) Date of publication:
**21.05.2025   Bulletin 2025/21**

(21) Application number: **23851512.6**

(22) Date of filing: **06.07.2023**

(51) International Patent Classification (IPC):
**H04W 52/02** (2009.01)

(52) Cooperative Patent Classification (CPC):
**Y02D 30/70**

(86) International application number:
**PCT/CN2023/106084**

(87) International publication number:
**WO 2024/032287 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022   CN 202210963816**

(71) Applicant: **Huawei Technologies Co., Ltd.
Shenzhen, Guangdong 518129 (CN)**

(72) Inventors:
• **SHI, Meng**
  **Shenzhen, Guangdong 518129 (CN)**
• **ZHANG, Jiayin**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **PAGING METHOD AND COMMUNICATION APPARATUS**

(57)    This application provides a paging method and a communication apparatus. The method includes: A terminal device determines a first paging monitoring occasion resource based on a first correspondence and a first location area to which a current location of the terminal device belongs, where a plurality of location areas correspond to a plurality of paging monitoring occasion resources in the first correspondence, and the first location area corresponds to the first paging monitoring occasion resource in the first correspondence. The terminal device detects downlink control information from a network device on the first paging monitoring occasion resource, where the downlink control information is used to schedule a paging message. **In** this way, power consumption of a communication device can be reduced.

400

S401: Determine a first PMO resource based on a first correspondence and a first location area to which a current location of a terminal device belongs, where a plurality of location areas correspond to a plurality of paging monitoring occasion resources in the first correspondence, and the first location area corresponds to the first PMO resource in the first correspondence

S402: Detect DCI on the first PMO resource, where the DCI is used to schedule a paging message

FIG. 4

## Description

This application claims priority to Chinese Patent Application No. 202210963816.9, filed with the China National Intellectual Property Administration on August 11, 2022 and entitled "PAGING METHOD AND COMMUNICATION APPARATUS", which is incorporated herein by reference in its entirety.

## TECHNICAL FIELD

This application relates to the communication field, and more specifically, to a paging method and a communication apparatus.

## BACKGROUND

In a mobile communication system, when a network device needs to send downlink data and/or to update system information to a terminal device in an idle state, the network device may page the terminal device, and the network device may send, on each paging monitoring occasion (paging monitoring occasion, PMO) resource in a paging frame (paging frame, PF) in a paging cycle, downlink control information (downlink control information, DCI) used to schedule a paging message, so that the DCI sent on various PMO resources through different beams can cover a service range of the network device. The terminal device sequentially detects the DCI on each PMO resource, to obtain the paging message based on the detected DCI.

However, for a network device with a large coverage area and a large quantity of serving beams, for example, a network device that needs hundreds of serving beams to cover a coverage area that meets an access condition, DCI, for a terminal device, that is used to schedule a paging message needs to be sent on hundreds of PMO resources. Correspondingly, the terminal device needs to detect, on the hundreds of PMO resources, whether the DCI exists, and consequently, resource overheads and power consumption are excessively high.

## SUMMARY

Embodiments of this application provide a paging method and a communication apparatus, to reduce power consumption of a communication device.

According to a first aspect, a paging method is provided. The method may be performed by a terminal device or a module (for example, a chip) configured in (or used in) the terminal device. The following uses an example in which the terminal device performs the paging method for description.

The method includes: The terminal device determines a first paging monitoring occasion resource based on a first correspondence and a first location area to which a current location of the terminal device belongs, where a plurality of location areas correspond to a plurality of paging monitoring occasion resources in the first correspondence, and the first location area corresponds to the first paging monitoring occasion resource in the first correspondence. The terminal device detects downlink control information from a network device on the first paging monitoring occasion resource, where the downlink control information is used to schedule a paging message.

According to the foregoing solution, the terminal device may determine, based on the location area to which the current location of the terminal device belongs, the first PMO resource used by the terminal device to detect the DCI (where the DCI is referred to as paging DCI below) used to schedule the paging message. The terminal device detects the DCI on the first PMO resource. In comparison with a case in which the terminal device detects paging DCI on each PMO resource, power consumption of the terminal device can be reduced.

With reference to the first aspect, in some implementations of the first aspect, the method further includes: The terminal device receives first information from the network device, where the first information indicates the first correspondence.

According to the foregoing solution, the network device may notify the terminal device of the first correspondence between the location area and the PMO resource by using the first information, so that the terminal device can determine, based on the location area and the first correspondence, the PMO resource for detecting the paging DCI. In this way, power consumption of the terminal device is reduced, and resource utilization is increased.

With reference to the first aspect, in some implementations of the first aspect, that the terminal device receives first information from the network device includes: The terminal device receives a first synchronization signal block; and the terminal device receives a system information block from the network device based on the first synchronization signal block, where the system information block includes the first information.

According to the foregoing solution, the first correspondence may be carried in the system information block, so that the terminal device may obtain the first correspondence based on the system information block broadcast by the network device, without establishing a radio resource control (radio resource control, RRC) connection to the network device.

With reference to the first aspect, in some implementations of the first aspect, the method further includes: The terminal device moves from the first location area to a second location area. The terminal device determines, based on the second location area and the first correspondence, a second paging monitoring occasion resource corresponding to the second location area; and the terminal device detects, on the second paging monitoring occasion resource, downlink control information used to schedule a paging message.

According to the foregoing solution, the terminal device changes the PMO resource in a timely manner after the location area changes, so that unnecessary power consumption caused when the terminal device detects the paging DCI on a PMO resource whose corresponding beam cannot cover the current location area is reduced, and paging reliability is improved.

With reference to the first aspect, in some implementations of the first aspect, the method further includes: The terminal device sends second information to the network device, where the second information indicates a location to which the terminal device moves, or indicates the second location area, and the location to which the terminal device moves belongs to the second location area.

According to the foregoing solution, the terminal device may notify the network device of location information of the terminal device by using the second information, so that the network device can learn of a current location area of the terminal device, and the network device may send paging DCI to the terminal device only on a PMO resource corresponding to the current location area of the terminal device, to further reduce power consumption of the network device and increase resource utilization. However, this application is not limited thereto. The network device may alternatively send one piece of paging DCI for the terminal device on each PMO resource, and the terminal device detects the paging DCI on at least the PMO resource corresponding to the location area. In comparison with a case in which the terminal detects the paging DCI on each PMO resource, power consumption of the terminal device can be reduced.

According to a second aspect, a paging method is provided. The method may be performed by a network device or a module (for example, a chip) configured in (or used in) the network device. The following uses an example in which the network device performs the paging method for description.

The method includes: The network device determines a first paging monitoring occasion resource based on a first correspondence and a first location area to which a current location of a terminal device belongs, where a plurality of location areas correspond to a plurality of paging monitoring occasion resources in the first correspondence, and the first location area corresponds to the first paging monitoring occasion resource in the first correspondence. The network device sends downlink control information to the terminal device on the first paging monitoring occasion resource, where the downlink control information is used to schedule a paging message.

According to the foregoing solution, the network device may send the paging DCI to the terminal device on the PMO resource corresponding to the current location area of the terminal device, so that power consumption of the network device can be reduced. In comparison with a case in which paging DCI is sent to the terminal device on each PMO resource, resource utilization can be increased.

With reference to the second aspect, in some implementations of the second aspect, the method further includes: The network device sends first information to the terminal device, where the first information indicates the first correspondence.

According to the foregoing solution, the network device may determine, based on the location area of the terminal device and the first correspondence, the PMO resource used by the terminal device to detect the paging DCI, and notify the terminal device of the first correspondence between the location area and the PMO resource by using the first information, so that the terminal device can also determine, based on the location area of the terminal device and the first correspondence, the PMO resource for detecting the paging DCI. In this way, the network device and the terminal device have a consistent understanding of the PMO resource used by the terminal device to detect the paging DCI.

With reference to the second aspect, in some implementations of the second aspect, that the network device sends first information to the terminal device includes: The network device sends a system information block to the terminal device, where the system information block includes the first information.

With reference to the second aspect, in some implementations of the second aspect, the method further includes: The network device determines that the terminal device moves from the first location area to a second location area. The network device determines, based on the second location area and the first correspondence, a second paging monitoring occasion resource corresponding to the second location area, and the network device detects, on the second paging monitoring occasion resource, downlink control information used to schedule a paging message.

With reference to the second aspect, in some implementations of the second aspect, that the network device determines that the terminal device moves from the first location area to a second location area includes: The network device receives second information from the terminal device, where the second information indicates a location to which the terminal device moves, or indicates the second location area, and the location to which the terminal device moves belongs to the second location area. The network device determines, based on the second information, that the terminal device moves from the first location area to the second location area.

For beneficial effects of the foregoing implementations, refer to the descriptions of the beneficial effects of the corresponding implementations in the first aspect. For brevity, details are not described herein again. With reference to the first aspect or the second aspect, in some implementations of the first aspect or the second aspect, the plurality of paging monitoring occasion resources are paging monitoring occasion resources in a plurality of resource groups, an interval between two resource groups that are adjacent in time is a first time interval, and the first time interval is configured by the network device.

According to the foregoing solution, the plurality of resource groups are separated by the first time interval, so that a probability that other downlink information of the network device cannot be sent in a timely manner due to consecutive PMO resources can be reduced. With reference to the first aspect or the second aspect, in some implementations of the first aspect or the second aspect, the plurality of resource groups include a first resource group and a second resource group that are adjacent in time, the first time interval between the first resource group and the second resource group includes one synchronization signal block group, and M synchronization signal blocks in the synchronization signal block group are in one-to-one correspondence with M paging monitoring occasion resources in the first resource group, or M synchronization signal blocks in the synchronization signal block group are in one-to-one correspondence with M paging monitoring occasion resources in the second resource group.

According to the foregoing solution, the network device may send, before or after one PMO resource group, a synchronization signal block group corresponding to the PMO resource group, so that the terminal device may perform downlink time-frequency synchronization calibration based on the synchronization signal block group used by the terminal device for time-frequency synchronization, and then detect paging DCI on a corresponding PMO resource. This improves reliability of paging the terminal device.

With reference to the first aspect or the second aspect, in some implementations of the first aspect or the second aspect, the plurality of paging occasion resources are paging occasion resources in one paging cycle, and the method further includes: The network device sends third information to the terminal device, where the third information indicates a first offset, the first offset is an offset between a start location of the paging cycle and a system frame whose frame number is 0, and the first offset is greater than a frame length of the system frame.

According to the foregoing solution, the first offset is at least greater than the frame length of one system frame, so that the network device may send, before the start location of the paging cycle, the synchronization signal group corresponding to a 1st PMO resource group. Therefore, after performing downlink time-frequency synchronization calibration based on the synchronization signal block, the terminal device detects the paging DCI on the corresponding PMO resource. This improves reliability of paging the terminal device.

According to a third aspect, a paging method is provided. The method may be performed by a terminal device or a module (for example, a chip) configured in (or used in) the terminal device. The following uses an example in which the terminal device performs the paging method for description.

The method includes: The terminal device determines a first paging monitoring occasion resource based on a first synchronization signal block and a second correspondence, where the first synchronization signal block is used for time-frequency synchronization between the terminal device and a network device, a plurality of synchronization signal blocks correspond to a plurality of paging monitoring occasion resources in the second correspondence, and the first synchronization signal block corresponds to the first paging monitoring occasion resource in the second correspondence. The terminal device detects downlink control information on the first paging monitoring occasion resource, where the downlink control information is used to schedule a paging message.

According to the foregoing solution, the terminal device may determine, based on the second correspondence between the synchronization signal block and the PMO resource, a PMO resource corresponding to a synchronization signal block (that is, a synchronization signal block serving the terminal device) used by the terminal device for time-frequency synchronization with the network device, and detect paging DCI on the PMO resource. In comparison with a case in which the terminal device detects paging DCI on each PMO resource, power consumption of the terminal device can be reduced.

With reference to the third aspect, in some implementations of the third aspect, the method further includes: The terminal device receives fourth information from the network device, where the fourth information indicates the second correspondence.

According to the foregoing solution, the network device may notify the terminal device of the second correspondence between the synchronization signal block and the PMO resource by using the fourth information, so that the terminal device may determine, based on the synchronization signal block and the second correspondence, the PMO resource for detecting the paging DCI. In this way, power consumption of the terminal device is reduced, and resource utilization is increased.

With reference to the third aspect, in some implementations of the third aspect, that the terminal device receives fourth information from the network device includes: The terminal device receives the first synchronization signal block, and the terminal device receives a system information block from the network device based on the first synchronization signal block, where the system information block includes the fourth information.

According to the foregoing solution, the second correspondence may be carried in the system information block, so that the terminal device may obtain the second correspondence based on the system information block broadcast by the network device, without establishing an RRC connection to the network device.

With reference to the third aspect, in some implementations of the third aspect, the method further includes: The terminal device moves from a first location area to a second location area, where the first location area is a location area corresponding to the first synchronization signal block. The terminal device determines a second paging monitoring occasion resource based on the second correspondence and a second synchronization signal block corresponding to the second location area; and the terminal device detects, on the second paging monitoring occasion resource, downlink control information used to schedule a paging message.

According to the foregoing solution, the terminal device changes the PMO resource in a timely manner after the location area changes, so that unnecessary power consumption caused when the terminal device detects the paging DCI on a PMO resource whose corresponding beam cannot cover the current location area is reduced, and paging reliability is improved.

With reference to the third aspect, in some implementations of the third aspect, the method further includes: The terminal device receives the second synchronization signal block in the second location area, and determines that the second location area corresponds to the second synchronization signal block; or the terminal device determines, based on a third correspondence, the second synchronization signal block corresponding to the second location area in the third correspondence, where the third correspondence is a correspondence between a plurality of synchronization signal blocks and a plurality of location areas.

With reference to the third aspect, in some implementations of the third aspect, the method further includes: The terminal device sends fifth information to the network device, where the fifth information indicates one or more of the following:

the second synchronization signal block, a location to which the terminal device moves, or the second location area, where

the location to which the terminal device moves belongs to the second location area.

According to the foregoing solution, the terminal device may notify the network device of the location information of the terminal device or the synchronization signal block by using the fifth information, so that the network device may determine the PMO resource currently used by the terminal device to detect the paging DCI, and send the paging DCI to the terminal device on the PMO resource, to further reduce power consumption of the network device and increase resource utilization.

According to a fourth aspect, a paging method is provided. The method may be performed by a network device or a module (for example, a chip) configured in (or used in) the network device. The following uses an example in which the network device performs the paging method for description.

The method includes: The network device determines a first paging monitoring occasion resource based on a first synchronization signal block and a second correspondence, where a plurality of synchronization signal blocks correspond to a plurality of paging monitoring occasion resources in the second correspondence, and the first synchronization signal block corresponds to the first paging monitoring occasion resource in the second correspondence. The network device sends downlink control information to a terminal device on the first paging monitoring occasion resource, where the downlink control information is used to schedule a paging message, and the terminal device is a terminal device that implements time-frequency synchronization with the network device based on the first synchronization signal block.

According to the foregoing solution, the network device may determine, based on the first synchronization signal block serving the terminal device and the second correspondence, the first PMO resource used by the terminal device to detect the DCI, and the network device sends the paging DCI to the terminal device on the first PMO resource, so that power consumption of the network device can be reduced. In comparison with a case in which paging DCI is sent to the terminal device on each PMO resource, resource utilization can be increased.

With reference to the fourth aspect, in some implementations of the fourth aspect, the method further includes: The network device sends fourth information to the terminal device, where the fourth information indicates the second correspondence.

With reference to the fourth aspect, in some implementations of the fourth aspect, that the network device sends fourth information to the terminal device includes: The network device sends a system information block to the terminal device, where the system information block includes the fourth information.

With reference to the fourth aspect, in some implementations of the fourth aspect, the method further includes: The network device determines a second paging monitoring occasion based on a second synchronization signal block and the second correspondence, where the second synchronization signal block is a synchronization signal block corresponding to a location to which the terminal device moves. The network device sends, to the terminal device on the second paging monitoring occasion resource, downlink control information used to schedule a paging message.

With reference to the fourth aspect, in some implementations of the fourth aspect, the method further includes: The network device determines that the terminal device moves from a first location area to a second location area, where the first location area is a location area corresponding to the first synchronization signal block. The network device determines, based on a third correspondence, the second synchronization signal block corresponding to the second location area in the third correspondence, where the third correspondence is a correspondence between a plurality of synchronization signal blocks and a plurality of location areas.

With reference to the fourth aspect, in some implementations of the fourth aspect, the method further includes: The network device receives fifth information from the terminal device, where the fifth information indicates one or more of the following:

the second synchronization signal block, the location to which the terminal device moves, or the second location area, where

the location to which the terminal device moves belongs to the second location area. For beneficial effects of the foregoing implementations, refer to the descriptions of the beneficial effects of the corresponding implementations in the first aspect. For brevity, details are not described herein again.

With reference to the third aspect or the fourth aspect, in some implementations of the third aspect or the fourth aspect, the plurality of paging monitoring occasion resources are paging monitoring occasion resources in a plurality of resource groups, an interval between two resource groups that are adjacent in time is a first time interval, and the first time interval is configured by the network device.

With reference to the third aspect or the fourth aspect, in some implementations of the third aspect or the fourth aspect, the plurality of resource groups include a first resource group and a second resource group that are adjacent in time, the first time interval between the first resource group and the second resource group includes one synchronization signal block group, and M synchronization signal blocks in the synchronization signal block group are in one-to-one correspondence with M paging monitoring occasion resources in the first resource group, or M synchronization signal blocks in the synchronization signal block group are in one-to-one correspondence with M paging monitoring occasion resources in the second resource group.

With reference to the third aspect or the fourth aspect, in some implementations of the third aspect or the fourth aspect, the plurality of paging occasion resources are paging occasion resources in one paging cycle, and the method further includes: The terminal device receives third information from the network device, where the third information indicates a first offset, the first offset is an offset between a start location of the paging cycle and a system frame whose frame number is 0, and the first offset is greater than a frame length of the system frame.

According to a fifth aspect, a paging method is provided. The method may be performed by a terminal device or a module (for example, a chip) configured in (or used in) the terminal device. The following uses an example in which the terminal device performs the paging method for description.

The method includes: The terminal device determines a first paging monitoring occasion resource based on a first synchronization signal block and a fourth correspondence, where the fourth correspondence includes a correspondence between a plurality of synchronization signal blocks and a plurality of paging monitoring occasion resources in each of a plurality of time periods, the first synchronization signal block is used for time-frequency synchronization between the terminal device and a network device, the first synchronization signal block corresponds to the first paging monitoring occasion resource in a first time period of the plurality of time periods, and the first time period is a time period to which a moment at which the terminal device receives the first synchronization signal block belongs. The terminal device detects downlink control information on the first paging monitoring occasion resource, where the downlink control information is used to schedule a paging message for the terminal device.

According to the foregoing solution, when a location area covered by a synchronization signal, of the network device, identified by a same index changes with time, the terminal device may determine, based on the fourth correspondence, a PMO resource corresponding to a current serving synchronization signal block in a current time period, and detect paging DCI on the PMO resource. In comparison with a case in which the terminal device detects paging DCI on each PMO resource, power consumption of the terminal device can be reduced.

With reference to the fifth aspect, in some implementations of the fifth aspect, the method further includes: The terminal device receives sixth information from the network device, where the sixth information indicates the fourth correspondence.

With reference to the fifth aspect, in some implementations of the fifth aspect, that the terminal device receives sixth information from the network device includes: The terminal device receives the first synchronization signal block; and the terminal device receives a system information block from the network device based on the first synchronization signal block, where the system information block includes the sixth information.

According to a sixth aspect, a paging method is provided. The method may be performed by a network device or a module (for example, a chip) configured in (or used in) the network device. The following uses an example in which the network device performs the paging method for description.

The method includes: The network device determines a first paging monitoring occasion resource based on a first synchronization signal block and a fourth correspondence, where the fourth correspondence includes a correspondence between a plurality of synchronization signal blocks and a plurality of paging monitoring occasion resources in each of a plurality of time periods, the first synchronization signal block corresponds to the first paging monitoring occasion resource in a first time period of the plurality of time periods, the first synchronization signal block is used for time-frequency synchronization between a terminal device and the network device, and the first time period is a time period to which a moment at which the terminal device receives the first synchronization signal belongs.

The network device sends downlink control information to the terminal device on the first paging monitoring occasion resource, where the downlink control information is used to schedule a paging message for the terminal device.

According to the foregoing solution, when a location area covered by a synchronization signal, of the network device, identified by a same index changes with time, the network device may determine, based on the fourth correspondence, a PMO resource corresponding to a serving synchronization signal block of the terminal device in a current time period, and send paging DCI to the terminal device on the PMO resource. In comparison with a case in which paging DCI is sent to the terminal device on each PMO resource, power consumption of the network device can be reduced, and resource utilization can be increased.

With reference to the sixth aspect, in some implementations of the sixth aspect, the method further includes: The network device sends sixth information to the terminal device, where the sixth information indicates the fourth correspondence.

With reference to the sixth aspect, in some implementations of the sixth aspect, that the network device sends sixth information to the terminal device includes: The network device sends a system information block to the terminal device, where the system information block includes the sixth information.

With reference to the fifth aspect or the sixth aspect, in some implementations of the fifth aspect or the sixth aspect, the plurality of paging monitoring occasion resources are paging monitoring occasion resources in a plurality of resource groups, an interval between two resource groups that are adjacent in time is a first time interval, and the first time interval is configured by the network device.

With reference to the fifth aspect or the sixth aspect, in some implementations of the fifth aspect or the sixth aspect, the plurality of resource groups include a first resource group and a second resource group that are adjacent in time, the first time interval between the first resource group and the second resource group includes one synchronization signal block group, and M synchronization signal blocks in the synchronization signal block group are in one-to-one correspondence with M paging monitoring occasion resources in the first resource group, or M synchronization signal blocks in the synchronization signal block group are in one-to-one correspondence with M paging monitoring occasion resources in the second resource group.

With reference to the fifth aspect or the sixth aspect, in some implementations of the fifth aspect or the sixth aspect, the plurality of paging occasion resources are paging occasion resources in one paging cycle, and the method further includes: The terminal device receives third information from the network device, where the third information indicates a first offset, the first offset is an offset between a start location of the paging cycle and a system frame whose frame number is 0, and the first offset is greater than a frame length of the system frame.

According to a seventh aspect, a communication apparatus is provided. In a design, the apparatus may include a one-to-one corresponding module for performing the method/operation/step/action described in the first aspect. The module may be a hardware circuit, may be software, or may be implemented by using a combination of a hardware circuit and software. In a design, the apparatus includes: a processing unit, configured to determine a first paging monitoring occasion resource based on a first correspondence and a first location area to which a current location of a terminal device belongs, where a plurality of location areas correspond to a plurality of paging monitoring occasion resources in the first correspondence, and the first location area corresponds to the first paging monitoring occasion resource in the first correspondence; and a transceiver unit, configured to receive downlink control information from a network device on the first paging monitoring occasion resource, where the downlink control information is used to schedule a paging message.

With reference to the seventh aspect, in some implementations of the seventh aspect, the transceiver unit is further configured to receive first information from the network device, where the first information indicates the first correspondence.

With reference to the seventh aspect, in some implementations of the seventh aspect, the transceiver unit is specifically configured to receive a first synchronization signal block, and the processing unit is specifically configured to control, based on the first synchronization signal block, the transceiver unit to receive a system information block from the network device, where the system information block includes the first information.

With reference to the seventh aspect, in some implementations of the seventh aspect, the processing unit is further configured to determine that the terminal device moves from the first location area to a second location area, and determine, based on the second location area and the first correspondence, a second paging monitoring occasion resource corresponding to the second location area. The transceiver unit is further configured to receive, on the second paging monitoring occasion resource, downlink control information used to schedule a paging message.

With reference to the seventh aspect, in some implementations of the seventh aspect, the transceiver unit is configured to send second information to the network device, where the second information indicates a location to which the terminal device moves, or indicates the second location area, and the location to which the terminal device moves belongs to the second location area.

According to an eighth aspect, a communication apparatus is provided. **In** a design, the apparatus may include a one-to-one corresponding module for performing the method/operation/step/action described in the second aspect. The module may be a hardware circuit, may be software, or may be implemented by using a combination of a hardware circuit and software. In a design, the apparatus includes: a processing unit, configured to determine a first paging monitoring occasion resource based on a first correspondence and a first location area to which a current location of a terminal device belongs, where a plurality of location areas correspond to a plurality of paging monitoring occasion resources in the first correspondence, and the first location area corresponds to the first paging monitoring occasion resource in the first correspondence; and a transceiver unit, configured to send downlink control information to the terminal device on the first paging monitoring occasion resource, where the downlink control information is used to schedule a paging message.

With reference to the eighth aspect, in some implementations of the eighth aspect, the transceiver unit is further configured to send first information to the terminal device, where the first information indicates the first correspondence.

With reference to the eighth aspect, in some implementations of the eighth aspect, the transceiver unit is specifically configured to send a system information block to the terminal device, where the system information block includes the first information.

With reference to the eighth aspect, in some implementations of the eighth aspect, the processing unit is further configured to determine that the terminal device moves from the first location area to a second location area, and determine, based on the second location area and the first correspondence, a second paging monitoring occasion resource corresponding to the second location area. The transceiver unit is further configured to detect, on the second paging monitoring occasion resource, downlink control information used to schedule a paging message.

With reference to the eighth aspect, in some implementations of the eighth aspect, the transceiver unit is configured to receive second information from the terminal device, where the second information indicates a location to which the terminal device moves, or indicates the second location area, and the location to which the terminal device moves belongs to the second location area. The processing unit is specifically configured to determine, based on the second information, that the terminal device moves from the first location area to the second location area.

According to a ninth aspect, a communication apparatus is provided. In a design, the apparatus may include a one-to-one corresponding module for performing the method/operation/step/action described in the third aspect. The module may be a hardware circuit, may be software, or may be implemented by using a combination of a hardware circuit and software. In a design, the apparatus includes: a processing unit, configured to determine a first paging monitoring occasion resource based on a first synchronization signal block and a second correspondence, where the first synchronization signal block is used for time-frequency synchronization between a terminal device and a network device, a plurality of synchronization signal blocks correspond to a plurality of paging monitoring occasion resources in the second correspondence, and the first synchronization signal block corresponds to the first paging monitoring occasion resource in the second correspondence; and a transceiver unit, configured to receive downlink control information on the first paging monitoring occasion resource, where the downlink control information is used to schedule a paging message.

With reference to the ninth aspect, in some implementations of the ninth aspect, the transceiver unit is further configured to receive fourth information from the network device, where the fourth information indicates the second correspondence.

With reference to the ninth aspect, in some implementations of the ninth aspect, the transceiver unit is specifically configured to receive the first synchronization signal block, and the processing unit is configured to control, based on the first synchronization signal block, the transceiver unit to receive a system information block from the network device, where the system information block includes the fourth information.

With reference to the ninth aspect, in some implementations of the ninth aspect, the processing unit is configured to determine that the terminal device moves from a first location area to a second location area, where the first location area is a location area corresponding to the first synchronization signal block; and the processing unit is further configured to determine a second paging monitoring occasion resource based on the second correspondence and a second synchronization signal block corresponding to the second location area. The transceiver unit is further configured to receive, on the second paging monitoring occasion resource, downlink control information used to schedule a paging message.

With reference to the ninth aspect, in some implementations of the ninth aspect, the method further includes: the processing unit is further configured to determine, based on the second synchronization signal block received by the transceiver unit when the terminal device is in the second location area, that the second location area corresponds to the second synchronization signal block. Alternatively, the processing unit is further configured to determine, based on a third correspondence, the second synchronization signal block corresponding to the second location area in the third correspondence, where the third correspondence is a correspondence between a plurality of synchronization signal blocks and a plurality of location areas.

With reference to the ninth aspect, in some implementations of the ninth aspect, the transceiver unit is further configured to send fifth information to the network device, where the fifth information indicates one or more of the following:

the second synchronization signal block, a location to which the terminal device moves, or the second location area, where

the location to which the terminal device moves belongs to the second location area.

According to a tenth aspect, a communication apparatus is provided. In a design, the apparatus may include a one-to-one corresponding module for performing the method/operation/step/action described in the fourth aspect. The module may be a hardware circuit, may be software, or may be implemented by using a combination of a hardware circuit and software. In a design, the apparatus includes: a processing unit, configured to determine a first paging monitoring occasion resource based on a first synchronization signal block and a second correspondence, where a plurality of synchronization signal blocks correspond to a plurality of paging monitoring occasion resources in the second correspondence, and the first synchronization signal block corresponds to the first paging monitoring occasion resource in the second correspondence, and a transceiver unit, configured to send downlink control information to a terminal device on the first paging monitoring occasion resource, where the downlink control information is used to schedule a paging message, and the terminal device is a terminal device that implements time-frequency synchronization with a network device based on the first synchronization signal block.

With reference to the tenth aspect, in some implementations of the tenth aspect, the transceiver unit is further configured to send fourth information to the terminal device, where the fourth information indicates the second correspondence.

With reference to the tenth aspect, in some implementations of the tenth aspect, the transceiver unit is specifically configured to send a system information block to the terminal device, where the system information block includes the fourth information.

With reference to the tenth aspect, in some implementations of the tenth aspect, the processing unit is further configured to determine a second paging monitoring occasion based on a second synchronization signal block and the second correspondence, where the second synchronization signal block is a synchronization signal block corresponding to a location to which the terminal device moves. The transceiver unit is further configured to send, to the terminal device on the second paging monitoring occasion resource, downlink control information used to schedule a paging message.

With reference to the tenth aspect, in some implementations of the tenth aspect, the processing unit is further configured to determine that the terminal device moves from a first location area to a second location area, where the first location area is a location area corresponding to the first synchronization signal block. The processing unit is further configured to determine, based on a third correspondence, the second synchronization signal block corresponding to the second location area in the third correspondence, where the third correspondence is a correspondence between a plurality of synchronization signal blocks and a plurality of location areas.

With reference to the tenth aspect, in some implementations of the tenth aspect, the transceiver unit is further configured to receive fifth information from the terminal device, where the fifth information indicates one or more of the following:

the second synchronization signal block, the location to which the terminal device moves, or the second location area, where

the location to which the terminal device moves belongs to the second location area.

According to an eleventh aspect, a communication apparatus is provided. In a design, the apparatus may include a one-to-one corresponding module for performing the method/operation/step/action described in the fifth aspect. The module may be a hardware circuit, may be software, or may be implemented by using a combination of a hardware circuit and software. In a design, the apparatus includes: a processing unit, configured to determine a first paging monitoring occasion resource based on a first synchronization signal block and a fourth correspondence, where the fourth correspondence includes a correspondence between a plurality of synchronization signal blocks and a plurality of paging monitoring occasion resources in each of a plurality of time periods, the first synchronization signal block is used for time-frequency synchronization between the terminal device and a network device, the first synchronization signal block corresponds to the first paging monitoring occasion resource in a first time period of the plurality of time periods, and the first time period is a time period to which a moment at which the terminal device receives the first synchronization signal belongs; and a transceiver unit, configured to receive downlink control information on the first paging monitoring occasion resource, where the downlink control information is used to schedule a paging message for the terminal device.

With reference to the eleventh aspect, in some implementations of the eleventh aspect, the transceiver unit is further configured to receive sixth information from the network device, where the sixth information indicates the fourth correspondence.

With reference to the eleventh aspect, in some implementations of the eleventh aspect, the transceiver unit is specifically configured to receive the first synchronization signal block; and the processing unit controls, based on the first synchronization signal block, the transceiver unit to receive a system information block from the network device, where the system information block includes the sixth information.

According to a twelfth aspect, a communication apparatus is provided. In a design, the apparatus may include a one-to-one corresponding module for performing the method/operation/step/action described in the sixth aspect. The module may be a hardware circuit, may be software, or may be implemented by using a combination of a hardware circuit and software. In a design, the apparatus includes: a processing unit, configured to determine a first paging monitoring occasion resource based on a first synchronization signal block and a fourth correspondence, where the fourth correspondence includes a correspondence between a plurality of synchronization signal blocks and a plurality of paging monitoring occasion resources in each of a plurality of time periods, the first synchronization signal block corresponds to the first paging monitoring occasion resource in a first time period of the plurality of time periods, the first synchronization signal block is used for time-frequency synchronization between a terminal device and the network device, and the first time period is a time period to which a moment at which the terminal device receives the first synchronization signal belongs; and a transceiver unit, configured to send downlink control information to the terminal device on the first paging monitoring occasion resource, where the downlink control information is used to schedule a paging message for the terminal device.

With reference to the twelfth aspect, in some implementations of the twelfth aspect, the transceiver unit is further configured to send sixth information to the terminal device, where the sixth information indicates the fourth correspondence.

With reference to the twelfth aspect, in some implementations of the twelfth aspect, the transceiver unit is specifically configured to send a system information block to the terminal device, where the system information block includes the sixth information.

According to a thirteenth aspect, a communication apparatus is provided, and includes a processor. The processor may implement the method in any one of the possible implementations of the first aspect, the third aspect, or the fifth aspect. Optionally, the communication apparatus further includes a memory. The processor is coupled to the memory, and may be configured to execute instructions in the memory, to implement the method in any one of the possible implementations of the first aspect, the third aspect, or the fifth aspect. Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a fourteenth aspect, a communication apparatus is provided, and includes a processor. The processor may implement the method in any one of the possible implementations of the second aspect, the fourth aspect, or the sixth aspect. Optionally, the communication apparatus further includes a memory. The processor is coupled to the memory, and may be configured to execute instructions in the memory, to implement the method in any one of the possible implementations of the second aspect, the fourth aspect, or the sixth aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface.

Optionally, the transceiver may be a transceiver circuit. Optionally, the input/output interface may be an input/output circuit.

According to a fifteenth aspect, a processor is provided, and includes an input circuit, an output circuit, and a processing circuit. The processing circuit is configured to receive a signal through the input circuit, and transmit a signal through the output circuit, so that the processor performs the method in any one of the possible implementations of the first aspect to the sixth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

According to a sixteenth aspect, a computer program product is provided. The computer program product includes a computer program (which may also be referred to as code or instructions). When the computer program is run, a computer is enabled to perform the method in any one of the possible implementations of the first aspect to the sixth aspect.

According to a seventeenth aspect, a computer-readable storage medium is provided. The computer-readable storage medium stores a computer program (which may also be referred to as code or instructions). When the computer program is run on a computer, the computer is enabled to perform the method in any one of the possible implementations of the first aspect to the sixth aspect.

In some implementations of the seventeenth aspect, the computer that performs the method in any one of the possible implementations of the first aspect, the third aspect, or the fifth aspect may be the terminal device, or the computer that performs the method in any one of the possible implementations of the second aspect, the fourth aspect, or the sixth aspect may be the network device.

According to an eighteenth aspect, a communication system is provided, including the at least one terminal device and the at least one network device described above.

## BRIEF DESCRIPTION OF DRAWINGS

FIG. 1 is a diagram of a communication system according to an embodiment of this application;
FIG. 2 is a diagram of an architecture of an NTN network to which embodiments of this application are applicable;
FIG. 2a is a diagram of another architecture of an NTN network to which embodiments of this application are applicable;
FIG. 3 is a diagram of a PF and a PMO resource according to an embodiment of this application;
FIG. 4 is a schematic flowchart of a paging method according to an embodiment of this application;
FIG. 5 is a diagram of a first correspondence according to an embodiment of this application;
FIG. 6 is a diagram of a coverage area of a satellite in staring mode according to an embodiment of this application;
FIG. 7 is a diagram of a coverage area of a satellite in non-staring mode according to an embodiment of this application;
FIG. 8 and FIG. 9 each are another schematic flowchart of a paging method according to an embodiment of this application;
FIG. 10 to FIG. 13 each are a diagram of a PMO resource group according to an embodiment of this application;
FIG. 14 is a diagram of a structure of a communication apparatus according to an embodiment of this application; and
FIG. 15 is a diagram of a structure of a communication apparatus according to an embodiment of this application.

## DESCRIPTION OF EMBODIMENTS

The following describes technical solutions of this application with reference to the accompanying drawings.

In this application, "at least one (item)" may be also described as "one (item) or more (items)", and "a plurality of (items)" may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions of this application, a word such as "first", "second", "A", or "B" may be used to distinguish between technical features with a same or similar function. The word such as "first", "second", "A", or "B" does not limit a quantity and an execution sequence. In addition, the word such as "first", "second", "A", or "B" does not limit a definite difference. A word such as "example" or "for example" is used to represent an example, an evidence, or a description. Any design solution described as "example" or "for example" should not be explained as being more preferred or having more advantages than another design solution. The word such as "example" or "for example" is used to present a related concept in a specific manner for ease of understanding.

The technical solutions in embodiments of this application may be applied to various communication systems, for example, a long term evolution (long term evolution, LTE) system, a 5G system, a new radio (new radio, NR) system, and a future communication system, such as a 6th generation mobile communication system. These communication systems may provide cellular coverage by using a non-terrestrial network (non-terrestrial networks, NTN) technology. This is not limited in this application.

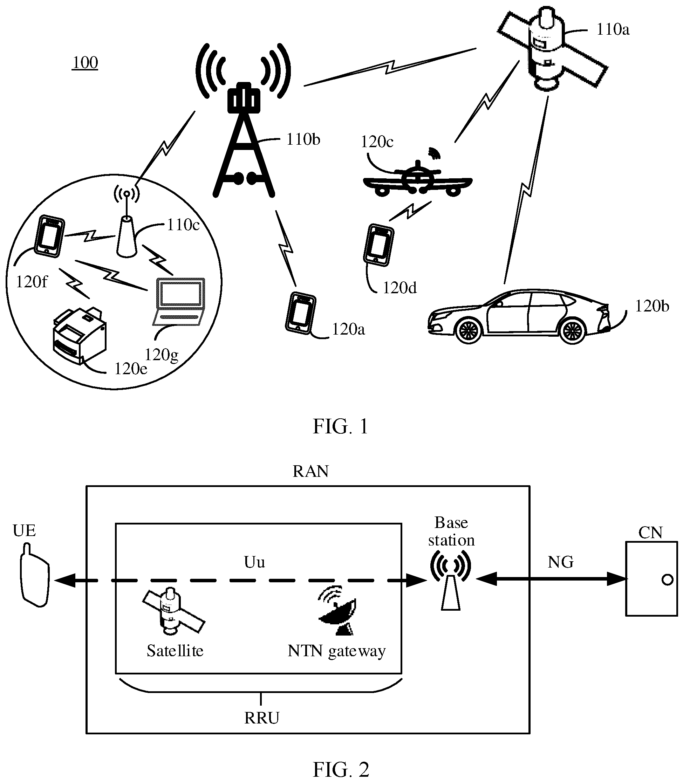

FIG. 1 is a diagram of an architecture of a communication system 100 to which embodiments of this application are applicable. As shown in FIG. 1, the communication system 100 may include at least one network device (for example, 110a, 110b, and 110c in FIG. 1), and may further include at least one terminal (for example, 120a to 120j in FIG. 1). Network devices may be connected to each other in a wired or wireless manner. FIG. 1 is merely a diagram. The communication system may further include another network device, for example, may further include a wireless relay device and a wireless backhaul device.

In an NTN network, a satellite may implement transparent payload (transparent payload) transmission or regenerative payload (regenerative payload) transmission.

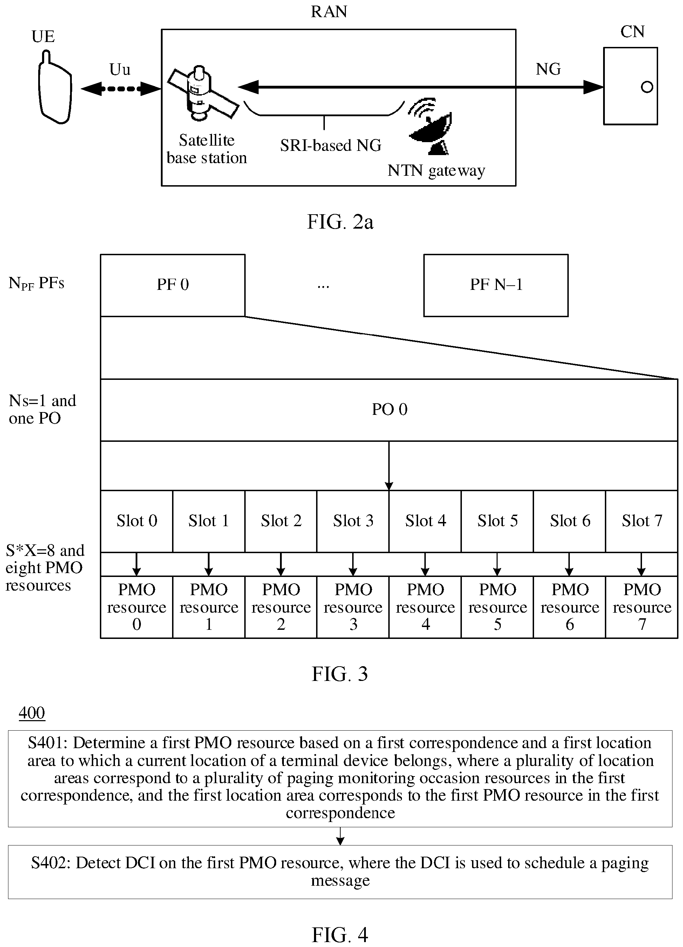

FIG. 2 is a diagram of an architecture of an NTN network to which embodiments of this application are applicable. As shown in FIG. 2, user equipment (user equipment, UE) communicates with a ground base station via a ground base station through a universal terrestrial radio access network-user (universal terrestrial radio access network-user, Uu) interface. A satellite may implement transparent payload transmission between a user and the ground base station. The satellite and an NTN gateway may be considered as a remote radio unit (remote radio unit) of the ground base station, and implement transparent forwarding of a signal. In other words, the satellite supports only functions such as radio frequency filtering and frequency conversion and amplification, where a signal waveform is unchanged. Forwarding of the satellite is transparent to a terminal device. The ground base station may communicate with a core network (core network, CN) through a next generation network (next generation, NG) interface, and exchange, through the NG interface, non-access stratum (non-access stratum, NAS) signaling of the core network and service data of the UE.

FIG. 2a is a diagram of another architecture of an NTN network to which embodiments of this application are applicable. As shown in FIG. 2a, a satellite has some or all functions of an access network device, and may be referred to as a satellite base station. The satellite can provide a radio access service, and schedule a radio resource for a terminal device that accesses a network via the satellite base station. The satellite base station communicates with UE through a Uu interface. The satellite base station may communicate with a CN through an NG interface, and the satellite base station and the core network may exchange, through the NG interface, NAS signaling and service data of the UE. A satellite radio interface (satellite radio interface, SRI) interface is a feeder link between an NTN gateway and the satellite. In FIG. 2a, the SRI interface may be used as a part of the NG interface to implement communication and interaction between the satellite and the core network.

A network device provided in embodiments of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 1 or the satellite base station in FIG. 2), or may be a macro base station (for example, 110b in FIG. 1). Alternatively, the access network device may be a micro base station or an indoor base station (for example, 110c in FIG. 1), or may be a relay node or a donor node. A specific technology and a specific device form that are used by the access network device are not limited in this application.

In embodiments of this application, some or all functions of the network device may be on a non-terrestrial network (non-terrestrial network, NTN) platform (where the NTN platform includes but is not limited to a satellite, an uncrewed aircraft system (unmanned aircraft system, UAS), a high altitude communication platform (high altitude platform station, HAPS), and the like), or some or all functions of the network device are on the ground, and the NTN platform is responsible for forwarding a signal between the UE and the access network device.

A terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used by the terminal device are not limited in this application.

The base station and/or the terminal device may be fastened or movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application.

Currently, the terminal device detects, in a paging frame (paging frame PF) in a discontinuous reception (discontinuous reception, DRX) cycle, downlink control information (downlink control information, DCI) used to schedule a paging message. The DRX cycle may also be referred to as a paging cycle. As shown in FIG. 3, one DRX cycle T may include $N_{PF}$ PFs, one PF is a radio frame, and a system frame number (system frame number, SFN) of the PF satisfies the following formula:

$$(SFN + PF\_offset) \bmod T = (T \operatorname{div} N_{PF}) * (UE\_ID \bmod N_{PF})$$

T div $N_{PF}$ represents a quantity of system frames included in each system frame group after the DRX cycle T is equally divided into $N_{PF}$ system frame groups. UE_ID is an identifier (identifier, ID) of a terminal device, and a 1st system frame in a (UE_ID mod N)th system frame group in the $N_{PF}$ system groups is a PF.

A network device configures the DRX cycle T for the terminal device. For example, the cycle T may be 32 radio frames (radio frame), 64 radio frames, or the like. The network device further configures, for the terminal device, $N_{PF}$ used to determine a quantity of paging frames, and a value of $N_{PF}$ may be T, T/2, T/4, T/8, or T/16.

One PF includes Ns paging occasions (paging occasion, PO), a PO is a set of physical downlink control channel (physical downlink control channel, PDCCH) monitoring occasion (PDCCH monitoring occasion, PMO) resources, and an index $i\_s$ of the PO satisfies the following formula:

$$i\_s = \operatorname{floor}(UE\_ID/N_{PF}) \bmod Ns$$

floor(UE_ID/N) represents a floor operation on a result of UE_ID divided by N. Each PO includes PMO resources in S consecutive slots, and S is a quantity of actually broadcast SSBs in one synchronization signal block and physical broadcast channel (physical broadcast channel, PBCH) block (synchronization signal and PBCH block, SSB) burst set (burst set) block.

As shown in FIG. 3, S=8, and the PO includes PMO resources respectively belonging to eight consecutive slots. To be specific, the eight slots, namely, a slot 0 to a slot 7, respectively include a PMO resource 0 to a PMO resource 7 in sequence. The eight PMO resources sequentially correspond to eight SSBs that are actually broadcast in one SSB burst group. DCI used to schedule a paging message is sent on each PMO resource in a transmit beam direction of a corresponding SSB, and the DCI is carried on a PDCCH in the PMO resource. In other words, the DCI used to schedule a paging resource is sent on the PDCCH in each PMO resource in the transmit beam direction of the corresponding SSB.

When the network device needs to send the paging message to the terminal device, because the network device does not determine a beam range of a specific SSB in which the terminal device is located, the network device sends, on each PMO resource in one PO in a transmit beam direction of a corresponding SSB, DCI used to schedule the paging message, so that the DCI covers a service range of the network device. Correspondingly, the terminal device detects, on each PMO resource, the DCI that is sent by the network device and that is used to schedule the paging message. The network device configures a paging radio network temporary identifier (paging radio network temporary identifier, P-RNTI) for the terminal device. The DCI that is sent by the network device to the terminal device and that is used to schedule the paging message is scrambled by using the P-RNTI. The terminal device may detect, based on the P-RNTI, the DCI that is used to schedule the paging message for the terminal device. The DCI is used to schedule a PDSCH carrying the paging message. After receiving the DCI, the terminal device receives the paging message on the PDSCH scheduled by using the DCI.

However, for a network device with a large coverage area and a large quantity of serving beams, for example, for a network device in a non-terrestrial network (non-terrestrial networks, NTN), an example in which a satellite is used as a network device in the NTN. For a low-orbit C-band satellite with an orbit height of 508 km, a coverage area that can meet an access condition is about 10,000 square kilometers. When a beam width is 4.6 degrees, about 650 serving beams are needed to cover the coverage area that meets the access condition. If the foregoing paging manner is still used for the network device with the large coverage area and the large quantity of serving beams, the network device needs to send, on hundreds of PMO resources, DCI, for a terminal device, that is used to schedule a paging message. Correspondingly, the terminal device needs to detect, on the hundreds of PMO resources, whether the DCI exists. Consequently, power consumption overheads of the terminal device are excessively high.

This application provides a paging method. A terminal device may determine a corresponding PMO resource based on a location of the terminal device, and detect, on the PMO resource corresponding to the location of the terminal device, DCI used to schedule a paging message. In this way, power consumption of the terminal device can be reduced. In addition, the terminal device may report location-related information to a network device, so that the network device may send, based on the location of the terminal device and on the PMO resource corresponding to the location, the DCI, for the terminal device, that is used to schedule the paging message. In this way, power consumption of the network device can be reduced, and resource utilization can be increased.

FIG. 4 is a schematic flowchart of a paging method according to an embodiment of this application.

S401: A terminal device determines a first PMO resource based on a first correspondence and a first location area to which a current location of the terminal device belongs, where a plurality of location areas correspond to a plurality of PMO resources in the first correspondence, and the first location area corresponds to the first PMO resource in the first correspondence.

The terminal device may obtain location information of the current location of the terminal device. For example, the terminal device may receive a positioning signal, and obtain the location information of the current location of the terminal device based on the positioning signal. The positioning signal may be from a network device shown in FIG. 4 or from another network device used for positioning, for example, a positioning satellite. The terminal device may determine, based on the current location information, that the current location of the terminal device is in the first location area in the plurality of location areas in the first correspondence. The first location area corresponds to the first PMO resource in the first correspondence. In this case, the terminal device may determine to detect, on the first PMO resource, DCI used to schedule a paging message for the terminal device.

Optionally, the network device sends first information to the terminal device, where the first information indicates the first correspondence. Correspondingly, the terminal device receives the first information from the network device, and determines the first correspondence.

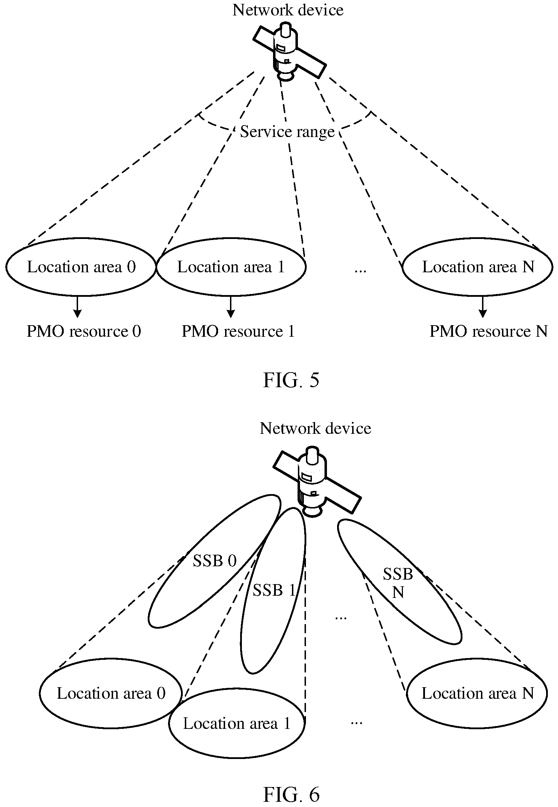

For example, as shown in FIG. 5, a service range of the network device covers a location area 0 to a location area N. The network device may determine a first correspondence between a location area and a PMO resource. For example, in the first correspondence, the location area 0 corresponds to a PMO resource 0, the location area 1 corresponds to a PMO resource 1, ..., and the location area N corresponds to a PMO resource N. The network device configures, for the terminal device by using the first information, a PMO resource corresponding to each location area in a coverage area, where N is a positive integer. The terminal device may determine the first PMO resource based on the first location area and the first correspondence. In this way, the terminal device in one location area may detect paging DCI only on a PMO resource corresponding to the location area, and does not need to detect the paging DCI on each PMO resource, so that power consumption of the terminal device can be reduced.

For example, the network device may configure the N location areas for the terminal device by using the first information to indicate a longitude coordinate and a latitude coordinate, and the terminal device determines the N location areas based on the longitude coordinate and the latitude coordinate that are indicated by the first information. Alternatively, the location area and a corresponding identifier may be predefined, and the network device notifies the terminal device of the N location areas by using the first information to indicate the identifier of the location area. The terminal device determines the corresponding N location areas based on N identifiers indicated in the first information. Alternatively, the network device may indicate the location area in another manner. This is not limited in this application. It should be noted that sizes of different location areas may be different, and a shape of the location area is not limited in this application, and may be implemented based on a specific implementation requirement.

In an implementation, the first information is carried in a master information block (master information block, MIB).

For example, the terminal device receives an SSB from the network device, obtains a MIB carried on a PBCH in the SSB, and therefore determines the first correspondence based on the first information of the MIB.

In another implementation, the first information is carried in a system information block (system information block, SIB). Optionally, that the terminal device receives the first information from the network device includes: The terminal device receives a first synchronization signal block, and receives a system information block from the network device based on the first synchronization signal block, where the system information block includes the first information.

For example, the terminal device receives an SSB from the network device, and receives a SIB 1 based on a MIB in the SSB. For example, the SIB 1 includes the first information, and the terminal device determines the first correspondence based on the first information in the SIB 1. Alternatively, the SIB 1 includes scheduling information of another SIB carrying other system information (other system information, OSI), the terminal device receives the another SIB based on the scheduling information, and the another SIB includes one or more of a SIB 2 to a SIB 9. The first information may be carried in at least one SIB in the SIB 2 to the SIB 9 as the OSI, and the terminal device determines the first correspondence based on the first information. After determining the first correspondence, the terminal device determines the first PMO resource based on the first correspondence and the first location area to which the current location belongs. This is not limited in this application.

S402: The terminal device detects the DCI on the first PMO resource, where the DCI is used to schedule the paging message.

If the network device needs to send the paging message to the terminal device, the network device sends the paging DCI to the terminal device on the first PMO resource. The terminal device may detect the DCI on the first PMO resource. For example, based on a P-RNTI configured by the network device for the terminal device, the terminal device scrambles, by using the P-RNTI, the paging DCI sent by the network device to the terminal device. For example, the P-RNTI may be used as a scrambling code to scramble a cyclic redundancy check (cyclic redundancy check, CRC) field in the DCI. The terminal device detects, on the PMO resource, whether there is the DCI scrambled by using the P-RNTI. If the DCI scrambled by using the P-RNTI is detected, the DCI indicates a PDSCH that carries the paging message, and a related parameter used to demodulate and decode the paging message. The terminal device may determine, based on the DCI, a PDSCH resource that carries the paging message, and receive the paging message from the network device on the PDSCH resource. If the DCI scrambled by using the P-RNTI is not detected, the terminal device considers that the network device does not send the paging DCI.

If the terminal device detects the paging DCI from the network device on the first PMO resource, the terminal device determines, based on the paging DCI received on the first PMO resource, the PDSCH that carries the paging message, and therefore receives, on the PDSCH, the paging message from the network device.

Optionally, the terminal device moves from the first location area to a second location area. The terminal device determines, based on the second location area and the first correspondence, a second PMO resource corresponding to the second location area. The terminal device detects the paging DCI on the second PMO resource.

If the terminal device moves, for example, a location of the terminal device changes from the first location area to the second location area in the first correspondence, the terminal device may determine, based on the first correspondence, the second PMO resource corresponding to the second location area, and the terminal device detects, on the second PMO resource in the second location area, DCI used to schedule a paging message for the terminal device.

In the embodiment shown in FIG. 4, when the network device needs to page the terminal device, the network device may send paging DCI on each PMO resource, and the terminal device may detect the paging DCI on the first PMO resource. Alternatively, the network device may determine the first PMO resource based on the first correspondence and the first location area to which the current location of the terminal device belongs, and send the paging DCI to the terminal device on the first PMO resource, so that power consumption of the network device can be reduced, and resource utilization can be increased. The terminal device may send information 1 to the network device. The information 1 indicates the location of the terminal device. For example, the information 1 may be location information of the current location of the terminal device, or the information 1 indicates the first location area. The network device determines, by using the information 1, that the terminal device is currently located in the first location area.

For example, the information 1 is the location information of the current location of the terminal device. After receiving the information 1, the network device may determine, based on the location information of the current location of the terminal device, that the terminal device is located in the first location area in the plurality of location areas in the first correspondence. In this case, the network device may determine the first PMO resource corresponding to the first location area, and the network device may determine that the terminal device detects, on the first PMO resource, the DCI used to schedule the paging message. The DCI used to schedule the paging message is referred to as the paging DCI for short below. However, a name of the DCI in a specific implementation is not limited in this application. When the network device needs to send the paging message to the terminal device, the network device may send the paging DCI to the terminal device on the first PMO resource.

For another example, the information 1 indicates the first location area. After receiving the information 1, the network device determines that the terminal device is located in the first location area, and may determine the first PMO resource based on the first correspondence. When the network device needs to send the paging message to the terminal device, the network device may send the paging DCI to the terminal device on the first PMO resource.

Optionally, after the terminal device moves to the second location area, the terminal device sends second information to the network device, where the second information indicates a location to which the terminal device moves, or the second information indicates the second location area.

Correspondingly, after receiving the second information from the terminal device, the network device determines that the terminal device moves to the second location area, and a PMO resource used by the terminal device to detect the paging DCI changes from the first PMO resource to the second PMO resource corresponding to the second location area. When the network device needs to send the paging message to the terminal device, the network device sends the paging DCI to the terminal device on the second PMO resource.

The embodiment shown in FIG. 4 is applicable to both a scenario in which the network device is a satellite in staring mode and a scenario in which the network device is a satellite in non-staring mode. The network device may determine, based on the location area in which the terminal device is located, the PMO resource used by the terminal device to detect the paging DCI. When the network device needs to send the paging message to the terminal device, the network device may determine, based on the location area in which the terminal device is located, a transmit beam whose beam direction corresponds to the location area in which the terminal device is located, that is, a coverage area of the transmit beam includes the location area, send, through the transmit beam, the paging DCI to the terminal device on the PMO resource used by the terminal device to detect the paging DCI, and send, through the transmit beam, the paging message to the terminal device on the PDSCH indicated by the paging DCI.

The satellite in staring mode means that a coverage area of a same synchronization signal block (that is, a synchronization signal block identified by a same index) of the satellite is a same location area in different time periods, in other words, the coverage area of the synchronization signal block does not change with time. For example, as shown in FIG. 6, a service range of the satellite in staring mode used as a network device includes N SSBs (that is, an example of the synchronization signal block) to provide access and synchronization services. A correspondence between an SSB of the network device and a location area remains unchanged, that is, a location area covered by a coverage area of the SSB remains unchanged. As shown in FIG. 6, an SSB 0 corresponds to a location area 0, an SSB 1 corresponds to a location area 1, ..., and an SSB N corresponds to a location area N. If the terminal device is located in the location area 1, the network device may send, on a PMO resource corresponding to the location area 1, paging DCI to the terminal device through a transmit beam whose beam direction is consistent with that of a transmit beam of the SSB 1, and send a paging message on a PDSCH indicated by the paging DCI.

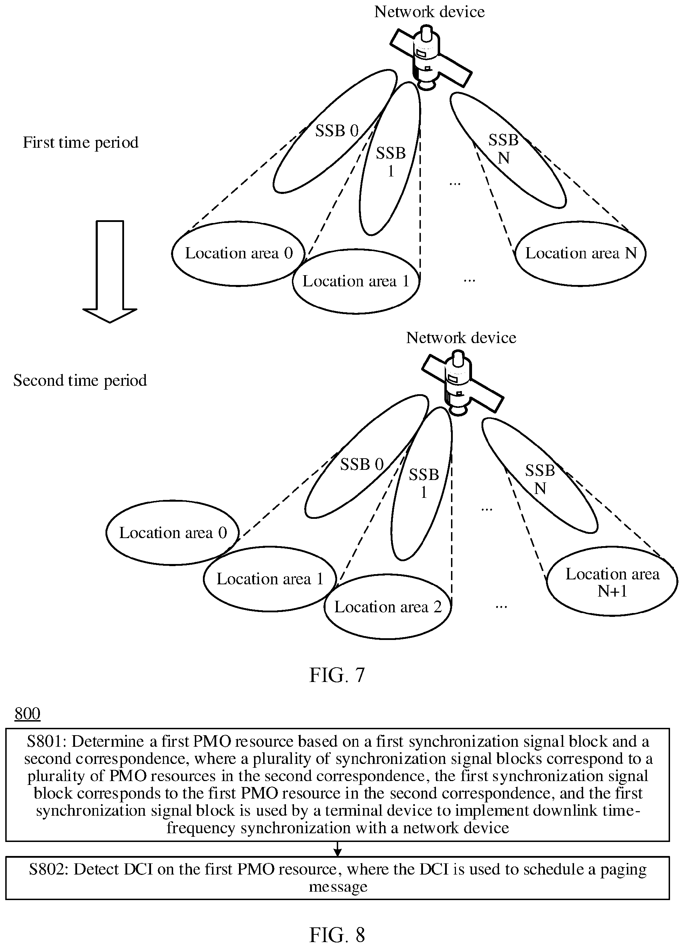

The satellite in non-staring mode means that a beam direction (for example, a beam weight) of a same synchronization signal block (that is, a synchronization signal block identified by a same index) of the satellite does not change with time, but a coverage area changes with time. In other words, a location area covered by a beam of the same synchronization signal block changes with time. For example, as shown in FIG. 7, N SSBs in a service range of the satellite in non-staring mode used as the network device correspond to different location areas in a first time period and a second time period. As shown in FIG. 7, in the first time period, an SSB 0 corresponds to a location area 0, an SSB 1 corresponds to a location area 1, ..., and an SSB N corresponds to a location area N. In the second time period, the SSB 0 corresponds to the location area 1, the SSB 1 corresponds to the location area 2, ..., and the SSB N corresponds to a location area N+1. If the terminal device is located in the location area 1 in both the first time period and the second time period, the terminal device and the network device may determine, based on the first correspondence, to detect paging DCI on a PMO resource 1 corresponding to the location area 1. If the network device needs to send a paging message to the terminal device in the first time period, the network device may send the paging DCI to the terminal device on the PMO resource 1 through a beam corresponding to the SSB 1 whose beam direction covers the location area 1 in the first time period, and send the paging message on a PDSCH indicated by the paging DCI. The terminal device may detect the paging DCI on the PMO resource 1, and receive the paging message based on the DCI. If the network device needs to send a paging message to the terminal device in the second time period, the network device may send the paging DCI to the terminal device on the PMO resource 1 through a beam corresponding to the SSB 2 whose beam direction covers the location area 1 in the second time period, and send the paging message on a PDSCH indicated by the paging DCI. The terminal device may detect the paging DCI on the PMO resource 1, and receive the paging message based on the DCI.

FIG. 8 is another schematic flowchart of a paging method according to an embodiment of this application.

S801: A terminal device determines a first PMO resource based on a first synchronization signal block and a second correspondence, where a plurality of synchronization signal blocks correspond to a plurality of paging monitoring occasion resources in the second correspondence, the first synchronization signal block corresponds to the first PMO resource in the second correspondence, and the first synchronization signal block is used by the terminal device to implement downlink time-frequency synchronization with a network device.

For example, a synchronization signal block may be an SSB. For example, the network device includes N SSBs in a service range of the network device, where N is a positive integer. Each SSB provides a network service such as access and synchronization for a terminal device in a beam coverage area of the SSB. The terminal device may implement downlink time-frequency synchronization with the network device based on an SSB 1.

For example, the first synchronization signal block may be a synchronization signal block with highest signal quality in a plurality of synchronization signal blocks that can be received by the terminal device from the network device. Signal quality of the synchronization signal block may include but is not limited to one or more of a received signal strength indicator (received signal strength indicator, RSSI), a reference signal received power (reference signal received power, RSRP), reference signal received quality (reference signal receive quality, RSRQ), or a signal to interference plus noise ratio (signal to interference plus noise ratio, SINR) of the synchronization signal block (for example, may be specifically a synchronization signal in the synchronization signal block).

The terminal device may determine the first PMO resource that corresponds to the first synchronization signal block in the second correspondence, and therefore determine to detect paging DCI on the first PMO resource.

Optionally, the network device sends fourth information to the terminal device, where the fourth information indicates the second correspondence. Correspondingly, the terminal device receives the fourth information from the network device, and determines the second correspondence based on the fourth information.

The network device may determine the second correspondence between an SSB and a PMO resource. For example, in the second correspondence, an SSB 0 corresponds to a PMO resource 0, the SSB 1 corresponds to a PMO resource 1, ..., and an SSB N corresponds to a PMO resource N. The network device configures, for the terminal device by using the fourth information, a PMO resource corresponding to each SSB, and a terminal device in a beam coverage area of one SSB may receive paging DCI on the PMO resource corresponding to the SSB. In this way, the terminal device may determine the first PMO resource based on the second correspondence and the synchronization signal block (that is, the first synchronization signal block) with the highest signal quality that can be received by the terminal device. Therefore, the terminal device may detect the paging DCI only on the PMO resource corresponding to the first synchronization signal block, and does not need to detect the paging DCI on each PMO resource, so that power consumption of the terminal device can be reduced.

In an implementation, the fourth information is carried in a SIB.

Optionally, that the terminal device receives the fourth information from the network device includes: The terminal device receives the first synchronization signal block, and receives a system information block from the network device based on the first synchronization signal block, where the system information block includes the fourth information.

By way of example and not limitation, the SIB is the SIB 1 or another SIB carrying OSI. For details, refer to the implementation in which the system information block includes the first information in the embodiment shown in FIG. 4. For brevity, details are not described herein again.

S802: The terminal device detects the DCI on the first PMO resource, where the DCI is used to schedule a paging message.

For a specific implementation of S802, refer to the foregoing descriptions of S402 shown in FIG. 4. For brevity, details are not described herein again.

In the embodiment shown in FIG. 8, when the network device needs to page the terminal device, the network device may send paging DCI on each PMO resource, and the terminal device may detect the paging DCI on the first PMO resource. Alternatively, the network device determines, based on the first synchronization signal block and the second correspondence, the first PMO resource used by the terminal device to detect the DCI used to schedule the paging message. In this way, power consumption of the network device can be reduced, and resource utilization can be increased.

The terminal device may send information 2 to the network device, and the network device determines, based on the information 2, that a synchronization signal block used by the terminal device for time-frequency synchronization is the first synchronization signal block. Optionally, the information 2 indicates one or more of the following: the first synchronization signal block, the first PMO resource, location information of a current location of the terminal device, or a first location area.

A coverage area of the first synchronization signal block is the first location area. In other words, the first location area is a location area in which the terminal device receives the first synchronization signal block.

For example, the information 2 indicates the first synchronization signal block, and the terminal device notifies the network device that the current synchronization signal block for time-frequency synchronization is the first synchronization signal block, so that the network device can determine, based on the second correspondence and the first synchronization signal block that serves the terminal device, that the PMO resource used by the terminal device to detect the paging DCI is the first PMO resource. In this way, the network device and the terminal device can reach an agreement on the PMO resource used by the terminal device to detect the paging DCI, to improve paging reliability.

For another example, the information 2 indicates the location information of the current location of the terminal device or the first location area. After receiving the information 2, the network device may determine, based on the location information of the current location of the terminal device or the first location area, that the terminal device is in the coverage area of the first synchronization signal block, and then determine, based on the first synchronization signal and the second correspondence, the first PMO resource used by the terminal device to detect the paging DCI. In this way, the network device and the terminal device reach the agreement on the PMO resource used by the terminal device to detect the paging DCI.

The information 2 may alternatively indicate a plurality of items in the first synchronization signal block, the first PMO resource, the location information of the current location of the terminal device, or the first location area. For example, the information 2 may indicate the first synchronization signal block and the first PMO resource, or include the first synchronization signal block and the location information of the current location of the terminal device. This is not limited in this application.

The terminal device may determine, based on but not limited to the following implementations, that the first location area corresponds to the first synchronization signal block.

In an implementation, the synchronization signal block with the highest signal quality in the synchronization signal blocks received by the terminal device is the first synchronization signal block, and it is determined that the current location of the terminal device or the first location area in which the terminal device is located corresponds to the first synchronization signal block.

For example, the terminal device may determine, based on that the synchronization signal block with the highest signal quality in the synchronization signal blocks that can be received by the terminal device from the network device is the first synchronization signal block, that the terminal device is in the beam coverage area of the first synchronization signal block, and therefore determine that the current location of the terminal device or the first location area in which the terminal device is located corresponds to the first synchronization signal block.

In another implementation, the terminal device determines, based on a third correspondence, that the first location area corresponds to the first synchronization signal block, where the third correspondence is a correspondence between a plurality of synchronization signal blocks and a plurality of location areas, and the first location area corresponds to the first synchronization signal block in the third correspondence.

Optionally, the network device may send information 3 to the terminal device, where the information 3 indicates the third correspondence. Correspondingly, the terminal device receives the information 3, and determines the third correspondence.

For example, the third correspondence may be shown in Table 1. The terminal device may determine, based on location information of a location to which the terminal device moves, that the terminal device is currently located in the first location area of the plurality of location areas in the third correspondence, and therefore determine the first synchronization signal block corresponding to the first location area. Then, the terminal device may determine, based on the first synchronization signal block and the second correspondence, a second PMO resource corresponding to a second synchronization signal block in the second correspondence.

Table 1

| Synchronization signal block | Location area |
|---|---|
| First synchronization signal block | First location area |
| Second synchronization signal block | Second location area |
| ... | ... |

Optionally, the second correspondence may include the third correspondence.

In addition to the correspondence between the synchronization signal block and the PMO resource, the second correspondence further includes the correspondence between the synchronization signal block and the location area. In other words, the second correspondence includes a correspondence between the synchronization signal block, the PMO resource, and the location area.

For example, the second correspondence may be shown in Table 2. The first synchronization signal, the first PMO resource, and the first location area correspond to each other, and the second synchronization signal, the second PMO resource, and the second location area correspond to each other. The terminal device may determine, based on the location information of the current location, the first location area in the second correspondence, and therefore determine, based on the second correspondence, the first PMO resource corresponding to the first location area.

Table 2

| Synchronization signal block | PMO resource | Location area |
|---|---|---|
| First synchronization signal block | First PMO resource | First location area |
| Second synchronization signal block | Second PMO resource | Second location area |
| ... | ... | ... |

After the network device determines the first PMO resource based on the first synchronization signal block and the second correspondence, if the network device needs to send the paging message to the terminal device, the network device sends the DCI on the first PMO resource, where the DCI is used to schedule the paging message. Correspondingly, the terminal device receives the DCI from the network device on the first PMO resource. In this way, power consumption of the network device and the terminal device can be reduced, and resource utilization can be increased.

Optionally, the terminal device moves from the first location area to the second location area, and the first location area is a location area corresponding to the first synchronization signal block. The terminal device determines the second PMO resource based on the second synchronization signal block corresponding to the second location area and the second correspondence. The terminal device detects, on the second PMO resource, the DCI used to schedule the paging message.

For example, the beam coverage area of the first synchronization signal block is the first location area, and a beam coverage area of the second synchronization signal block is the second location area. When the terminal device moves from the beam coverage area of the first synchronization signal block to the beam coverage area of the second synchronization signal block, the terminal device may determine, based on the second correspondence, the second PMO resource corresponding to the second synchronization signal block, and therefore determine that the PMO resource for detecting the paging DCI changes from the first PMO resource to the second PMO resource. The terminal device detects the paging DCI for the terminal device on the second PMO resource in the beam coverage area of the second synchronization signal block.

For example, the terminal device cannot receive the first synchronization signal block after moving, and a synchronization signal block with highest signal quality in synchronization signal blocks that can be currently received is the second synchronization signal block. Alternatively, the terminal device can still receive the first synchronization signal block after moving, but a synchronization signal block with highest signal quality in synchronization signal blocks that can be currently received is the second synchronization signal block. In other words, the signal quality of the first synchronization signal block is lower than the signal quality of the second synchronization signal block. In this case, the terminal device determines that the synchronization signal block with the highest signal quality in the synchronization signal blocks that can be currently received is the second synchronization signal block. The terminal device may determine that the terminal device moves from the coverage area of the first synchronization signal block (that is, the first location area) to the coverage area of the second synchronization signal block (that is, the second location area). Therefore, the terminal device determines to detect the paging DCI on the second PMO resource corresponding to the second synchronization signal block. Alternatively, the terminal device may determine, based on the third correspondence, that a location to which the terminal device moves is in the second location area in the third correspondence, to determine the second synchronization signal block corresponding to the second location area in the third correspondence, and then determine, based on the second synchronization signal block and the second correspondence, the second PMO resource corresponding to the second synchronization signal block.

Optionally, the terminal device sends fifth information to the network device, where the fifth information indicates one or more of the following:

the second synchronization signal block, the second PMO resource, the location to which the terminal device moves, or the second location area.

After moving or changing the PMO resource for detecting the paging DCI, the terminal device may send the fifth information to the network device, so that the network device may determine, based on the fifth information, that the terminal device moves, and determine the second PMO resource for detecting the paging DCI after the terminal device moves. For a specific implementation of the fifth information, refer to the foregoing descriptions of the information 2. In other words, the fifth information and the information 2 are two pieces of information that are of a same type (or a same information format) but carry different specific information content.

The terminal device detects the paging DCI from the network device on the second PMO resource in the coverage area of the second synchronization signal. When the network device needs to send the paging message to the terminal device, the network device sends the paging DCI to the terminal device on the second PMO resource, to notify the terminal device of a PDSCH that carries the paging message, so that the terminal device can receive the paging message based on the paging DCI detected on the second PMO resource.

The embodiment shown in FIG. 8 is applicable to a scenario in which the network device is a satellite in staring mode, that is, a location area covered by a synchronization signal, of the network device, identified by a same index does not change with time. The terminal device detects, in a coverage area of a synchronization signal used by the terminal device for time-frequency synchronization, the paging DCI on a PMO resource corresponding to the synchronization signal. When the network device needs to send the paging message to the terminal device, the network device may send, through a transmit beam corresponding to the synchronization signal, the paging DCI to the terminal device on the PMO resource corresponding to the synchronization signal, and send, through the transmit beam, the paging message to the terminal device on a PDSCH indicated by the paging DCI.

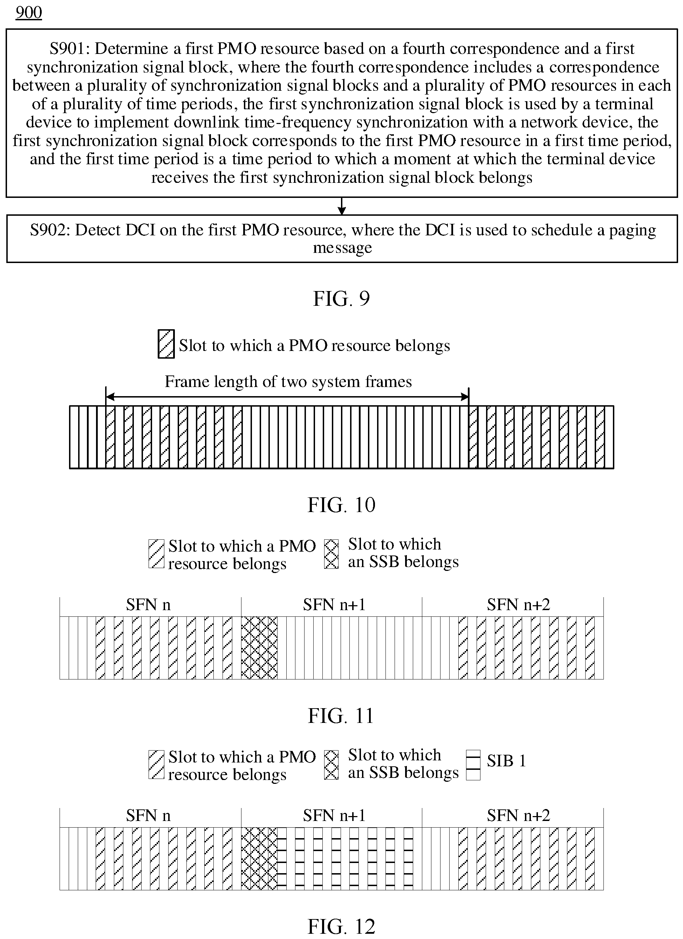

FIG. 9 is another schematic flowchart of a paging method according to an embodiment of this application. The embodiment shown in FIG. 9 provides a solution in which a terminal device detects paging DCI when a location area covered by a synchronization signal, of a network device, identified by a same index changes with time. The method includes but is not limited to the following steps.

S901: The terminal device determines a first PMO resource based on a fourth correspondence and a first synchronization signal block, where the fourth correspondence includes a correspondence between a plurality of synchronization signal blocks and a plurality of PMO resources in each of a plurality of time periods, the first synchronization signal block is used by the terminal device to implement downlink time-frequency synchronization with the network device, the first synchronization signal block corresponds to the first PMO resource in a first time period, and the first time period is a time period to which a moment at which the terminal device receives the first synchronization signal block belongs.

For example, the network device is the satellite in non-staring mode shown in FIG. 7, and N SSBs in a service range of the network device cover different location areas in different time periods. As shown in FIG. 7, in the first time period, an SSB 0 to an SSB N sequentially correspond to a location area 0 to a location area N, and in a second time period, the SSB 0 to the SSB N sequentially correspond to the location area 1 to a location area N+1. The network device may determine the fourth correspondence between each SSB and a PMO resource in different time periods. The network device may determine the fourth correspondence based on the location areas covered by the N SSBs in each time period. For example, the fourth correspondence may be shown in Table 3. For example, if in a time period from a moment t0 to a moment t1 (denoted as a time period [t0, t1), where the time period may include the moment t0 and does not include the moment t1, but this application is not limited thereto), the SSB 0 to the SSB N sequentially cover the location area 0 to the location area N, the network device may determine that the SSB 0 to the SSB N sequentially correspond to a PMO resource 0 to a PMO resource N in the time period [t0, t1), as shown in Table 3. In addition, if in a time period from the moment t1 to a moment t2 (denoted as a time period [t1, t2)), the SSB 0 to the SSB N sequentially cover the location area 1 to the location area N+1, the network device may determine that the SSB 0 to the SSB N-1 in the time period [t1, t2) sequentially correspond to the PMO resource 1 to the PMO resource N, and the SSB N corresponds to the PMO resource 0. It may be understood that the N SSBs sequentially correspond to the PMO resource 0 to the PMO resource N cyclically in different time periods. In this case, in a time period [t2, t3) (not shown in Table 3), the SSB 0 to the SSB N-2 sequentially correspond to the PMO resource 2 to the PMO resource N, and the SSB N-1 and the SSB N sequentially correspond to the PMO resource 0 and the PMO resource 1. Other time periods may be deduced by analogy.

Table 3

| Time period | Synchronization signal block | PMO resource |
|---|---|---|
| [t0, t1) | SSB 0 | PMO resource 0 |
| | SSB 1 | PMO resource 1 |
| | ... | |
| | SSB N | PMO resource N |
| [t1, t2) | SSB 0 | PMO resource 1 |
| | SSB 1 | PMO resource 2 |
| | ... | ... |
| | SSB N | PMO resource 0 |
| ... | ... | ... |

Optionally, the network device sends sixth information to the terminal device, where the sixth information indicates the fourth correspondence.

The network device may notify the terminal device of the fourth correspondence by using the sixth information, and the terminal device may determine, based on an SSB currently used for time-frequency synchronization and a time period in which the SSB is received, a PMO resource for detecting paging DCI in the time period.

In an implementation, the fourth information is carried in a SIB.

Optionally, that the terminal device receives the sixth information from the network device includes: The terminal device receives the first synchronization signal block, and receives a system information block from the network device based on the first synchronization signal block, where the system information block includes the sixth information.

By way of example and not limitation, the SIB is a SIB 1 or OSI. For details, refer to the implementation in which the system information block includes the first information in the embodiment shown in FIG. 4. For brevity, details are not described herein again.

The following provides an example of a manner in which the sixth information indicates the time period in the fourth correspondence when the network device indicates the fourth correspondence by using the sixth information. It should be understood that this application is not limited thereto.

In an example, the sixth information indicates the time period by indicating an absolute moment. For example, the sixth information indicates a start moment and an end moment of each time period, or indicates a start moment and duration of each time period. In this embodiment of this application, precision of the absolute moment and the duration indicated by the sixth information is not limited. For example, precision of the absolute moment and/or the duration may be second, millisecond, or microsecond.

In another example, the sixth information may indicate a start moment and an end moment of each time period by indicating an offset between the start moment and a reference frame and an offset between the end moment and the reference frame. The reference frame may be predefined or preconfigured by the network device. For example, the reference frame is a system frame whose system frame number (system frame number, SFN) is m, and is denoted as SFN m. The sixth information may indicate a quantity x of time units of an offset between a start moment of a time period and the SFN m, and a quantity y of time units of an offset between an end moment of the time period and the SFN m, where $y>x$. By way of example and not limitation, the time unit is a system frame, a subframe, a slot, or an OFDM symbol. For example, if the time unit is a system frame, the terminal device may determine, based on the sixth information, that the time period is from an SFN m+x to an SFN m+y. Alternatively, the sixth information may indicate a quantity x of time units of an offset between a start moment of a time period and the SFN m, and a quantity z of time units for which the time period lasts. For example, if the time unit is a system frame, the terminal device may determine, based on the sixth information, that the time period is from an SFN m+x to an SFN m+x+z.

S902: The terminal device detects the DCI on the first PMO resource, where the DCI is used to schedule a paging message.

For a specific implementation of S902, refer to the foregoing descriptions of S402 shown in FIG. 4. For brevity, details are not described herein again.

In the embodiment shown in FIG. 9, when the network device needs to page the terminal device, the network device may send paging DCI on each PMO resource, and the terminal device may detect the paging DCI on the first PMO resource. Alternatively, the network device determines, based on the fourth correspondence and the first synchronization signal block, the first PMO resource used by the terminal device to detect the DCI used to schedule the paging message. In this way, power consumption of the network device can be reduced, and resource utilization can be increased.

Optionally, the terminal device sends information 4 to the network device, where the information 4 indicates one or more of the following:

the first synchronization signal block, the first time period, location information of a current location of the terminal device, or a first location area.

The first location area is a coverage area of a first synchronization signal, and the location information of the current location of the terminal device belongs to the first location area.

Correspondingly, the network device receives the information 4 and the fourth correspondence from the terminal device, and determines the first PMO resource used by the terminal device to detect the paging DCI.

For example, the fourth correspondence is shown in Table 4. If the terminal device receives the SSB 1 in the time period [t0, t1), the terminal device may send the information 4 to the network device in the time period [t0, t1) (that is, an example of the first time period). The information 4 indicates the SSB 1 (that is, an example of the first synchronization signal block). If the network device receives the information 4 in the time period [t0, t1), the network device may determine, based on that the terminal device receives the SSB 1 and the fourth correspondence in the time period [t0, t1), the PMO resource 1 (that is, an example of the first PMO resource) used by the terminal device to detect the paging DCI in the time period [t0, t1).

For another example, the information 4 sent by the terminal device to the network device may include the first time period and the first synchronization signal block, so that the network device may determine, based on the fourth correspondence, the first time period, and the first synchronization signal block, the first PMO resource corresponding to the first synchronization signal block in the first time period in the fourth correspondence.

For another example, the information 4 sent by the terminal device to the network device may indicate the current location of the terminal device or the first location area, so that the network device may determine, based on the fourth correspondence, that the terminal device is in the coverage area of the first synchronization signal block in the current time period (that is, the first time period), and therefore determine the first PMO resource used by the terminal device to detect the paging DCI in the first time period.

When the network device needs to send the paging message to the terminal device, the network device sends the paging DCI on the first PMO resource. Correspondingly, the terminal device receives the DCI from the network device on the first PMO resource. In this way, power consumption of the network device and the terminal device can be reduced, and resource utilization can be increased.

In the foregoing embodiment, each location area in the coverage area of the network device needs to correspond to one PMO resource, or each synchronization signal block needs to correspond to one PMO resource. The network device sends the paging DCI on the corresponding PMO resource through the transmit beam in a beam direction corresponding to each location area (for example, the transmit beam of the synchronization signal block corresponding to the location area), so that the terminal device in the corresponding location area can detect respective paging DCI on the corresponding PMO resource. However, for a network device with a large coverage area, for example, a satellite in an NTN network used as a network device, more than 100 PMO resources are required. If a plurality of PMO resources are consecutive in time domain, continuity of data communication is affected, a large data communication delay is caused, and the like. Therefore, this application proposes that PMO resources may be grouped, and there is a specific time interval between different PMO resource groups. PMO resources in a same PMO resource group may respectively belong to consecutive time units, or may belong to non-consecutive time units. The time unit may be an orthogonal frequency division multiplexing (orthogonal frequency division multiplexing, OFDM) symbol group.

Optionally, in the foregoing embodiments, the plurality of PMO resources (for example, the plurality of PMO resources in the first correspondence to the fourth correspondence in the foregoing embodiments) are PMO resources in a plurality of resource groups, an interval between two resource groups that are adjacent in time is a first time interval, and the first time interval is configured by the network device.

For example, as shown in FIG. 10, an example in which a subcarrier spacing is 30 kHz is used. Every eight PMO resources are one PMO resource group. As shown in FIG. 10, one system frame includes 20 slots, and a first time interval between two adjacent PMO resource groups is a frame length of two system frames.

Optionally, the plurality of resource groups include a first resource group and a second resource group that are adjacent in time, the first time interval between the first resource group and the second resource group includes one synchronization signal block group, and M synchronization signal blocks in the synchronization signal block group are in one-to-one correspondence with M PMO resources in the first resource group, or M synchronization signal blocks in the synchronization signal block group are in one-to-one correspondence with M PMO resources in the second resource group.

For example, as shown in FIG. 11, eight slots in a system frame (where the system frame is denoted as an SFN n) with a system frame number (system frame number, SFN) n respectively include eight PMO resources in one PMO resource group, eight slots in an SFN n+2 respectively include eight PMO resources in a next PMO resource group, the two adjacent PMO resource groups are separated by a frame length of two system frames, and first four slots in an SFN n+1 between the two PMO resource groups carry an SSB group, for example, if one slot carries two SSBs, an SSB group carried in the four slots includes eight SSBs. The eight SSBs may be in one-to-one correspondence with the eight PMO resources in the PMO resource group in the SFN n+2. An SSB group corresponding to a PMO group in the SFN n shown in FIG. 11 may be transmitted in an SFN n-1. The network device may send, before one PMO resource group, an SSB corresponding to the PMO resource group, so that the terminal device may perform downlink time-frequency synchronization calibration based on the SSB group used by the terminal device for time-frequency synchronization, and then detect paging DCI on a corresponding PMO resource. This improves reliability of paging the terminal device.

Optionally, a SIB 1 resource group may be included between a synchronization signal group and a PMO resource group that are adjacent in time, the SIB 1 resource group includes M SIBs 1, and the M SIBs 1 are in one-to-one correspondence with M SSBs in the synchronization signal block group.

For example, as shown in FIG. 12, first four slots in an SFN n+1 include eight SSBs in one SSB group, and the system frame further includes eight SIBs 1 that are in one-to-one correspondence with the eight SSBs. Each SIB 1 is sent through a beam of a corresponding SSB. The terminal device may determine, based on a MIB in a received SSB, a slot to which a corresponding SIB 1 belongs, and receive the SIB 1. For example, the SIB 1 may include paging-related configuration information, including configuration information of a PMO resource. When the terminal device does not determine a PMO resource for detecting the paging DCI, the terminal device may determine, based on the SIB 1, the PMO resource for detecting the paging DCI, so that the paging DCI can be detected on a corresponding PMO resource in a next system frame.

Optionally, there may be at least one slot between slots to which two adjacent PMO resources in a same PMO group belong. The at least one slot may be used to carry OSI, or the at least one slot may be used for data transmission.

For example, as shown in FIG. 12, in an SFN n and an SFN n+2 that include PMO resources, there is one slot between slots to which two adjacent PMO resources belong, and a time domain resource (for example, a symbol and/or a slot) between the PMO resources may be used to carry OSI and/or used for data transmission. In addition, as shown in FIG. 12, in the SFN n+1 including the SIB 1, there may be one slot between slots to which adjacent SIBs 1 belong, and a time domain resource (for example, a symbol and/or a slot) between the SIBs 1 may be used to carry OSI and/or used for data transmission. However, this application is not limited thereto.

Optionally, two adjacent PMO resources in a same PMO group may be respectively included in two adjacent slots, and PMO resources in one PMO group are respectively included in a plurality of adjacent slots.

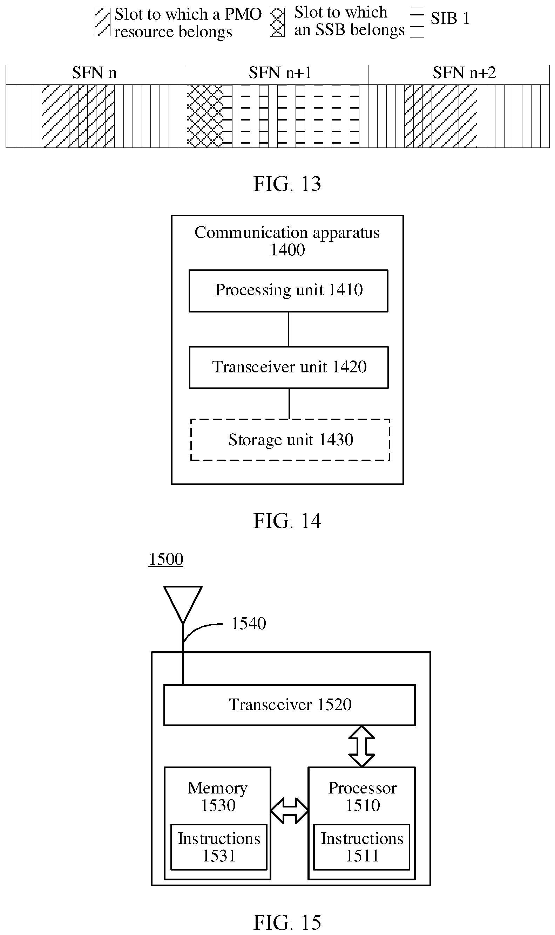

For example, as shown in FIG. 13, in an SFN n and an SFN n+2 that include PMO resources, eight PMO resources in a same PMO group are respectively included in eight consecutive slots, and a resource other than the PMO resources in an SFN (for example, the SFN n and the SFN n+2) that includes the PMO resources may be used as a PDSCH, for example, used to carry OSI and/or used for service data transmission.

Optionally, the network device sends third information to the terminal device, where the third information indicates a first offset, the first offset is an offset between a start location of a paging cycle and a system frame whose frame number is 0, and the first offset is greater than a frame length of the system frame.

Correspondingly, the terminal device receives the third information from the network device. For example, the paging-related configuration information sent by the network device includes the third information, and the first offset is indicated by the third information, so that the terminal device may determine the start location of the paging cycle of the terminal device based on the first offset and the system frame with the SFN 0. The first offset is at least greater than the frame length of one system frame, so that an SSB group corresponding to a 1st PMO group may be sent before the start location of the paging cycle.

For a network device with a large coverage area, because a large quantity of SSBs are required to cover a service range, and there are also a large quantity of corresponding PMO resources, the following two PMO resource configuration manners are provided in embodiments of this application.

Manner 1: One SSB burst group includes S SSBs, every L SSBs are one SSB group, one SSB burst group includes a total of $[S/L]$ SSB groups, one SSB group is in one system frame, one paging cycle includes $[S/L]$ PFs, that is, $N_{PF}=L$, and each PF includes L PMO resources corresponding to one SSB group.

For example, a quantity S of SSBs included in one SSB burst group is 256. If the network device uses the transmission mode shown in FIG. 11, every eight SSBs are one SSB group, that is, L=8, and 256 SSBs may be divided into 32 groups. Therefore, one paging cycle needs to include 32 PFs. One SSB group is in one system frame, and there are two system frames between two adjacent SSB groups. In this case, 64 system frames are required to complete transmission of 256 SSBs. It can be learned that a cycle of one SSB burst group is 64 system frames. Therefore, the paging cycle should also be 64 system frames, and there is one PF frame between system frames to which every two SSB groups belong. In this case, the network device may configure the paging cycle T=64 and $N_{PF}$ = T/2 = 32 for the terminal device. In this case, T div $N_{PF}$ = 2. To be specific, the 64 system frames in the paging cycle are divided into 32 system frame groups, each system frame group includes two system frames, and a 1st system frame in each system frame group is a PF. One PF includes PMO resources that are in one-to-one correspondence with eight SSBs in one system frame before the PF, as shown in FIG. 11. 32 PFs in one paging cycle include 256 PMO resources that sequentially correspond to 256 SSBs.

Manner 2: One paging cycle includes $N_{PF}$ PF groups, one PF group includes a plurality of PFs, one PF in one PF group includes L PMO resources corresponding to one SSB group, and one PF group includes PMO resources that are in one-to-one correspondence with SSBs in one SSB burst group.

In other words, in the manner 2, $N_{PF}$ is used to determine the PF group. Correspondingly, to meet the foregoing configuration requirement, an optional value of $N_{PF}$ may be added, for example, may include one or more optional values of T/32, T/64, T/128, or T/256 in addition to the optional values described above. An optional value of the paging cycle T may include 32 system frames, 64 system frames, 128 system frames, and 256 system frames.

For example, a quantity S of SSBs included in one SSB burst group is 256. If the network device uses the transmission mode shown in FIG. 11, the network device may configure the paging cycle T=128 and $N_{PF}$=T/64. In this case, each cycle includes T div $N_{PF}$=2, that is, two PF groups, and one PF group includes 64 system frames. For example, it may be specified that one PF is formed at an interval of two system frames starting from a 2nd system frame in one PF group. As shown in FIG. 13, a 1st system frame in one PF group is a system frame used by the network device to transmit a 1st SSB group (an SSB 0 to an SSB 7) in an SSB burst group, and a 2nd system frame is a 1st PF in the PF group, that is, a PF 0. The PF 0 includes a PMO resource 0 to a PMO resource 7 that are in one-to-one correspondence with eight SSBs in a previous system frame, and a system frame that is separated by two system frames from the PF 0 is a 2nd PF in the PF group, that is, a PF 1. The PF 1 includes a PMO resource 8 to a PMO resource 15 that are in one-to-one correspondence with an SSB 8 to an SSB 15 in a system frame before the PF 1. By analogy, a last system frame in the PF group is a PF 31, and includes a PMO resource 248 to a PMO resource 255 that are in one-to-one correspondence with an SSB 248 to an SSB 255 in a last SSB group in a system frame before the PF 31.

The terminal device may determine, in the foregoing two manners, a location of a PMO resource corresponding to each SSB in one SSB burst group. The terminal device may determine, based on a location area of the terminal device or an SSB used for time-frequency synchronization, a location of a PMO resource used by the terminal device to detect paging DCI. The terminal device detects the paging DCI on the PMO resource in each paging cycle.

The foregoing describes in detail the methods provided in this application with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 14 is a block diagram of a communication apparatus 1400 according to this application. As shown in FIG. 14, the communication apparatus 1400 may include a transceiver unit 1420.

In a possible design, the communication apparatus 1400 may correspond to the terminal device in the foregoing methods. When the communication apparatus 1400 corresponds to the terminal device, the communication apparatus 1400 may be a communication device, or the communication apparatus 1400 is a chip configured in (or used in) the communication device, or another apparatus, module, circuit, unit, or the like that can implement the method of the terminal device.

It should be understood that the communication apparatus 1400 may include units configured to perform the method performed by the terminal device in the foregoing method embodiments. In addition, the units in the communication apparatus 1400 and the foregoing other operations and/or functions are separately used to implement corresponding procedures in the foregoing method embodiments.

Optionally, the communication apparatus 1400 may further include a processing unit 1410. The processing unit 1410 may be configured to process instructions or data, to implement a corresponding operation.

It should be further understood that, when the communication apparatus 1400 is the chip configured in (or used in) the terminal device, the transceiver unit 1420 in the communication apparatus 1400 may be an input/output interface or circuit in the chip, and the processing unit 1410 in the communication apparatus 1400 may be a processor in the chip.

Optionally, the communication apparatus 1400 may further include a storage unit 1430. The storage unit 1430 may be configured to store instructions or data. The processing unit 1410 may execute the instructions or the data stored in the storage unit, to enable the communication apparatus to implement a corresponding operation.

It should be further understood that a specific process in which the units perform the foregoing corresponding steps is described in detail in the foregoing methods. For brevity, details are not described herein.

In another possible design, the communication apparatus 1400 may correspond to the network device in the foregoing methods. When the communication apparatus 1400 corresponds to the network device, the communication apparatus 1400 may be a communication device, or the communication apparatus 1400 is a chip configured in (or used in) the communication device, or another apparatus, module, circuit, unit, or the like that can implement the method of the network device.

It should be understood that the communication apparatus 1400 may include units configured to perform the method performed by the network device in the foregoing method embodiments. In addition, the units in the communication apparatus 1400 and the foregoing other operations and/or functions are separately used to implement corresponding procedures in the foregoing method embodiments.

Optionally, the communication apparatus 1400 may further include a processing unit 1410. The processing unit 1410 may be configured to process instructions or data, to implement a corresponding operation.

It should be further understood that, when the communication apparatus 1400 is the chip configured in (or used in) the network device, the transceiver unit 1420 in the communication apparatus 1400 may be an input/output interface or circuit in the chip, and the processing unit 1410 in the communication apparatus 1400 may be a processor in the chip.

Optionally, the communication apparatus 1400 may further include a storage unit 1430. The storage unit 1430 may be configured to store instructions or data. The processing unit 1410 may execute the instructions or the data stored in the storage unit, to enable the communication apparatus to implement a corresponding operation.

It should be understood that the transceiver unit 1420 in the communication apparatus 1400 may be implemented by using a communication interface (for example, a transceiver, a transceiver circuit, an input/output interface, or a pin), for example, may correspond to a transceiver 1520 in a communication apparatus 1500 shown in FIG. 15. The processing unit 1410 in the communication apparatus 1400 may be implemented by using at least one processor, for example, may correspond to a processor 1510 in the communication apparatus 1500 shown in FIG. 15. The processing unit 1410 in the communication apparatus 1400 may alternatively be implemented by using at least one logic circuit. The storage unit 1430 in the communication apparatus 1400 may correspond to a memory 1530 in the communication apparatus 1500 shown in FIG. 15.

FIG. 15 is a diagram of a structure of a communication apparatus 1500 according to an embodiment of this application. As shown in FIG. 15, the communication apparatus 1500 includes one or more processors 1510. The processor 1510 may be configured for internal processing of the apparatus to implement a specific control processing function. Optionally, the processor 1510 includes instructions 1511. Optionally, the processor 1510 may store data.

Optionally, the communication apparatus 1500 includes one or more memories 1530, configured to store instructions 1531. Optionally, the memory 1530 may further store data. The processor and the memory may be separately disposed, or may be integrated together.

Optionally, the communication apparatus 1500 may further include a transceiver 1520 and/or an antenna 1540. The transceiver 1520 may be configured to send information to another apparatus or receive information from another apparatus. The transceiver 1520 may be referred to as a transceiver machine, a transceiver circuit, an input/output interface, or the like, and is configured to implement receiving and sending functions of the communication apparatus 1500 through an antenna 1540. Optionally, the transceiver 1520 includes a transmitter (transmitter) and a receiver (receiver).

The communication apparatus 1500 may be applied to a communication device in the system shown in FIG. 1. The communication apparatus 1500 may correspond to a terminal device or a network device. The communication apparatus 1500 may be the communication device. Alternatively, the communication apparatus 1500 is configured in the communication device. For example, the communication apparatus 1500 may be a chip or a module configured in the communication device. The communication apparatus 1500 may perform operations of the terminal device or the network device in the foregoing method embodiments.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general-purpose processor may be a microprocessor, any conventional processor, or the like. The steps of the methods with reference to this application may be directly performed and completed by a hardware processor, or may be performed and completed by a combination of hardware and software modules in a processor.

In this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. Alternatively, the memory in this application may be a circuit or any other apparatus that can implement a storage function, and is configured to store program instructions and/or data.

This application further provides a processing apparatus, including a processor and a (communication) interface. The processor is configured to perform the method provided in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

This application further provides a computer-readable storage medium. The computer-readable storage medium stores a computer program or instructions. When the computer program or the instructions are run, the method performed by the terminal device or the network device in the foregoing method embodiments is implemented. In this way, the functions described in the foregoing embodiments may be implemented in a form of a software functional unit and sold or used as an independent product. Based on such an understanding, the technical solutions in this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk drive, a read-only memory (read-only memory, ROM), a random access memory RAM, a magnetic disk, or an optical disc.

According to the method provided in this application, this application further provides a computer program product. The computer program product includes computer program code. When the computer program code is executed by one or more processors, an apparatus including the processor is enabled to perform the methods shown in FIG. 4, FIG. 8, and FIG. 9.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The foregoing computer instructions may be stored in a computer-readable storage medium, or may be transmitted from a computer-readable storage medium to another computer-readable storage medium. The computer-readable storage medium may be any usable medium accessible to a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this application, this application further provides a system, including the foregoing one or more terminal devices. The system may further include the foregoing at least one network device.

In the several embodiments provided in this application, it should be understood that the disclosed system, apparatus, and method may be implemented in other manners. For example, the described apparatus is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A paging method, comprising:

   determining, by a terminal device, a first paging monitoring occasion resource based on a first correspondence and a first location area to which a current location of the terminal device belongs, wherein a plurality of location areas correspond to a plurality of paging monitoring occasion resources in the first correspondence, and the first location area corresponds to the first paging monitoring occasion resource in the first correspondence; and

   detecting, by the terminal device, downlink control information from a network device on the first paging monitoring occasion resource, wherein the downlink control information is used to schedule a paging message.

2. The method according to claim 1, wherein the method further comprises:
   receiving, by the terminal device, first information from the network device, wherein the first information indicates the first correspondence.

3. The method according to claim 2, wherein the receiving, by the terminal device, first information from the network device comprises:

   receiving, by the terminal device, a first synchronization signal block; and

   receiving, by the terminal device, a system information block from the network device based on the first synchronization signal block, wherein the system information block comprises the first information.

4. The method according to any one of claims 1 to 3, wherein the method further comprises:

   moving, by the terminal device, from the first location area to a second location area;

   determining, by the terminal device based on the second location area and the first correspondence, a second paging monitoring occasion resource corresponding to the second location area; and

   detecting, by the terminal device on the second paging monitoring occasion resource, downlink control information used to schedule a paging message.

5. The method according to claim 4, wherein the method further comprises:

   sending, by the terminal device, second information to the network device, wherein the second information indicates a location to which the terminal device moves, or indicates the second location area, and

   the location to which the terminal device moves belongs to the second location area.

6. The method according to any one of claims 1 to 5, wherein
   the plurality of paging monitoring occasion resources are paging monitoring occasion resources in a plurality of resource groups, an interval between two resource groups that are adjacent in time is a first time interval, and the first time interval is configured by the network device.

7. The method according to claim 6, wherein the plurality of resource groups comprise a first resource group and a second resource group that are adjacent in time, the first time interval between the first resource group and the second resource group comprises one synchronization signal block group, and M synchronization signal blocks in the synchronization signal block group are in one-to-one correspondence with M paging monitoring occasion resources in the first resource group, or M synchronization signal blocks in the synchronization signal block group are in one-to-one correspondence with M paging monitoring occasion resources in the second resource group.

8. The method according to any one of claims 1 to 7, wherein the plurality of paging occasion resources are paging occasion resources in one paging cycle, and the method further comprises:
   receiving, by the terminal device, third information from the network device, wherein the third information indicates a first offset, the first offset is an offset between a start location of the paging cycle and a system frame whose frame number is 0, and the first offset is greater than a frame length of the system frame.

9. A paging method, comprising:

   determining, by a network device, a first paging monitoring occasion resource based on a first correspondence and a first location area to which a current location of a terminal device belongs, wherein a plurality of location areas correspond to a plurality of paging monitoring occasion resources in the first correspondence, and the first location area corresponds to the first paging monitoring occasion resource in the first correspondence; and sending, by the network device, downlink control information to the terminal device on the first paging monitoring occasion resource, wherein the downlink control information is used to schedule a paging message.

10. The method according to claim 9, wherein the method further comprises:
sending, by the network device, first information to the terminal device, wherein the first information indicates the first correspondence.

11. The method according to claim 10, wherein the sending, by the network device, first information to the terminal device comprises:
sending, by the network device, a system information block to the terminal device, wherein the system information block comprises the first information.

12. The method according to any one of claims 9 to 11, wherein the method further comprises:

determining, by the network device, that the terminal device moves from the first location area to a second location area;
determining, by the network device based on the second location area and the first correspondence, a second paging monitoring occasion resource corresponding to the second location area; and
detecting, by the network device on the second paging monitoring occasion resource, downlink control information used to schedule a paging message.

13. The method according to claim 12, wherein the determining, by the network device, that the terminal device moves from the first location area to a second location area comprises:

receiving, by the network device, second information from the terminal device, wherein the second information indicates a location to which the terminal device moves, or indicates the second location area, and the location to which the terminal device moves belongs to the second location area; and
determining, by the network device based on the second information, that the terminal device moves from the first location area to the second location area.

14. The method according to any one of claims 9 to 13, wherein
the plurality of paging monitoring occasion resources are paging monitoring occasion resources in a plurality of resource groups, an interval between two resource groups that are adjacent in time is a first time interval, and the first time interval is configured by the network device.

15. The method according to claim 14, wherein the plurality of resource groups comprise a first resource group and a second resource group that are adjacent in time, the first time interval between the first resource group and the second resource group comprises one synchronization signal block group, and M synchronization signal blocks in the synchronization signal block group are in one-to-one correspondence with M paging monitoring occasion resources in the first resource group, or M synchronization signal blocks in the synchronization signal block group are in one-to-one correspondence with M paging monitoring occasion resources in the second resource group.

16. The method according to any one of claims 9 to 15, wherein the plurality of paging occasion resources are paging occasion resources in one paging cycle, and the method further comprises:
sending, by the network device, third information to the terminal device, wherein the third information indicates a first offset, the first offset is an offset between a start location of the paging cycle and a system frame whose frame number is 0, and the first offset is greater than a frame length of the system frame.

17. A paging method, comprising:

determining, by a terminal device, a first paging monitoring occasion resource based on a first synchronization signal block and a second correspondence, wherein the first synchronization signal block is used for time-frequency synchronization between the terminal device and a network device, a plurality of synchronization signal blocks correspond to a plurality of paging monitoring occasion resources in the second correspondence, and the first synchronization signal block corresponds to the first paging monitoring occasion resource in the second correspondence; and

detecting, by the terminal device, downlink control information on the first paging monitoring occasion resource, wherein the downlink control information is used to schedule a paging message.

18. The method according to claim 17, wherein the method further comprises:
receiving, by the terminal device, fourth information from the network device, wherein the fourth information indicates the second correspondence.

19. The method according to claim 18, wherein the receiving, by the terminal device, fourth information from the network device comprises:

receiving, by the terminal device, the first synchronization signal block; and
receiving, by the terminal device, a system information block from the network device based on the first synchronization signal block, wherein the system information block comprises the fourth information.

20. The method according to any one of claims 17 to 19, wherein the method further comprises:

moving, by the terminal device, from a first location area to a second location area, wherein the first location area is a location area corresponding to the first synchronization signal block;
determining, by the terminal device, a second paging monitoring occasion resource based on the second correspondence and a second synchronization signal block corresponding to the second location area; and
detecting, by the terminal device on the second paging monitoring occasion resource, downlink control information used to schedule a paging message.

21. The method according to claim 20, wherein the method further comprises:

receiving, by the terminal device, the second synchronization signal block in the second location area, and determining that the second location area corresponds to the second synchronization signal block; or
determining, by the terminal device based on a third correspondence, the second synchronization signal block corresponding to the second location area in the third correspondence, wherein the third correspondence is a correspondence between a plurality of synchronization signal blocks and a plurality of location areas.

22. The method according to claim 20 or 21, wherein the method further comprises:
sending, by the terminal device, fifth information to the network device, wherein the fifth information indicates one or more of the following:

the second synchronization signal block, a location to which the terminal device moves, or the second location area, wherein
the location to which the terminal device moves belongs to the second location area.

23. A paging method, comprising:

determining, by a network device, a first paging monitoring occasion resource based on a first synchronization signal block and a second correspondence, wherein a plurality of synchronization signal blocks correspond to a plurality of paging monitoring occasion resources in the second correspondence, and the first synchronization signal block corresponds to the first paging monitoring occasion resource in the second correspondence; and
sending, by the network device, downlink control information to a terminal device on the first paging monitoring occasion resource, wherein the downlink control information is used to schedule a paging message, and the terminal device is a terminal device that implements time-frequency synchronization with the network device based on the first synchronization signal block.

24. The method according to claim 23, wherein the method further comprises:
sending, by the network device, fourth information to the terminal device, wherein the fourth information indicates the second correspondence.

25. The method according to claim 24, wherein the sending, by the network device, fourth information to the terminal device comprises:
sending, by the network device, a system information block to the terminal device, wherein the system information block comprises the fourth information.

26. The method according to any one of claims 23 to 25, wherein the method further comprises:

determining, by the network device, a second paging monitoring occasion based on a second synchronization signal block and the second correspondence, wherein the second synchronization signal block is a synchronization signal block corresponding to a location to which the terminal device moves; and
sending, by the network device to the terminal device on the second paging monitoring occasion resource, downlink control information used to schedule a paging message.

27. The method according to claim 26, wherein the method further comprises:

determining, by the network device, that the terminal device moves from a first location area to a second location area, wherein the first location area is a location area corresponding to the first synchronization signal block; and
determining, by the network device based on a third correspondence, the second synchronization signal block corresponding to the second location area in the third correspondence, wherein the third correspondence is a correspondence between a plurality of synchronization signal blocks and a plurality of location areas.

28. The method according to claim 26 or 27, wherein the method further comprises:
receiving, by the network device, fifth information from the terminal device, wherein the fifth information indicates one or more of the following:

the second synchronization signal block, the location to which the terminal device moves, or the second location area, wherein
the location to which the terminal device moves belongs to the second location area.

29. A communication apparatus, comprising:

a processing unit, configured to determine a first paging monitoring occasion resource based on a first correspondence and a first location area to which a current location of a terminal device belongs, wherein a plurality of location areas correspond to a plurality of paging monitoring occasion resources in the first correspondence, and the first location area corresponds to the first paging monitoring occasion resource in the first correspondence; and
a transceiver unit, configured to detect downlink control information from a network device on the first paging monitoring occasion resource, wherein the downlink control information is used to schedule a paging message.

30. A communication apparatus, comprising:

a processing unit, configured to determine a first paging monitoring occasion resource based on a first correspondence and a first location area to which a current location of a terminal device belongs, wherein a plurality of location areas correspond to a plurality of paging monitoring occasion resources in the first correspondence, and the first location area corresponds to the first paging monitoring occasion resource in the first correspondence; and
a transceiver unit, configured to send downlink control information to the terminal device on the first paging monitoring occasion resource, wherein the downlink control information is used to schedule a paging message.

31. A communication apparatus, comprising:

a processing unit, configured to determine a first paging monitoring occasion resource based on a first synchronization signal block and a second correspondence, wherein the first synchronization signal block is used for time-frequency synchronization between a terminal device and a network device, a plurality of synchronization signal blocks correspond to a plurality of paging monitoring occasion resources in the second correspondence, and the first synchronization signal block corresponds to the first paging monitoring occasion resource in the second correspondence; and
a transceiver unit, configured to detect downlink control information on the first paging monitoring occasion resource, wherein the downlink control information is used to schedule a paging message.

32. A communication apparatus, comprising:

a processing unit, configured to determine a first paging monitoring occasion resource based on a first synchronization signal block and a second correspondence, wherein a plurality of synchronization signal blocks correspond to a plurality of paging monitoring occasion resources in the second correspondence, and the first synchronization signal block corresponds to the first paging monitoring occasion resource in the second correspondence; and

a transceiver unit, configured to send downlink control information to a terminal device on the first paging monitoring occasion resource, wherein the downlink control information is used to schedule a paging message, and the terminal device is a terminal device that implements time-frequency synchronization with a network device based on the first synchronization signal block.

33. A communication apparatus, comprising at least one processor, coupled to a memory, wherein

the memory is configured to store a program or instructions; and
the at least one processor is configured to execute the program or the instructions, so that the apparatus implements the method according to any one of claims 1 to 28.

34. A computer-readable storage medium, storing instructions, wherein when the instructions are run on a computer, the computer is enabled to perform the method according to any one of claims 1 to 28.

FIG. 1

FIG. 2

RAN

UE                                                                 CN

Uu                                        NG

Satellite base station      SRI-based NG

NTN gateway

**FIG. 2a**

$N_{PF}$ PFs

| PF 0 | ... | PF N–1 |

Ns=1 and one PO

| PO 0 |

| Slot 0 | Slot 1 | Slot 2 | Slot 3 | Slot 4 | Slot 5 | Slot 6 | Slot 7 |

S*X=8 and eight PMO resources

| PMO resource 0 | PMO resource 1 | PMO resource 2 | PMO resource 3 | PMO resource 4 | PMO resource 5 | PMO resource 6 | PMO resource 7 |

**FIG. 3**

400

S401: Determine a first PMO resource based on a first correspondence and a first location area to which a current location of a terminal device belongs, where a plurality of location areas correspond to a plurality of paging monitoring occasion resources in the first correspondence, and the first location area corresponds to the first PMO resource in the first correspondence

S402: Detect DCI on the first PMO resource, where the DCI is used to schedule a paging message

**FIG. 4**

FIG. 5

FIG. 6

Network device

First time period

SSB 0

SSB 1

SSB N

...

Location area 0

Location area 1

...

Location area N

Network device

Second time period

SSB 0

SSB 1

SSB N

...

Location area 0

Location area 1

Location area 2

...

Location area N+1

FIG. 7

800

| S801: Determine a first PMO resource based on a first synchronization signal block and a second correspondence, where a plurality of synchronization signal blocks correspond to a plurality of PMO resources in the second correspondence, the first synchronization signal block corresponds to the first PMO resource in the second correspondence, and the first synchronization signal block is used by a terminal device to implement downlink time-frequency synchronization with a network device |
| --- |
| S802: Detect DCI on the first PMO resource, where the DCI is used to schedule a paging message |

FIG. 8

900

S901: Determine a first PMO resource based on a fourth correspondence and a first synchronization signal block, where the fourth correspondence includes a correspondence between a plurality of synchronization signal blocks and a plurality of PMO resources in each of a plurality of time periods, the first synchronization signal block is used by a terminal device to implement downlink time-frequency synchronization with a network device, the first synchronization signal block corresponds to the first PMO resource in a first time period, and the first time period is a time period to which a moment at which the terminal device receives the first synchronization signal block belongs

↓

S902: Detect DCI on the first PMO resource, where the DCI is used to schedule a paging message

FIG. 9

▨ Slot to which a PMO resource belongs

Frame length of two system frames

FIG. 10

▨ Slot to which a PMO resource belongs  ▨ Slot to which an SSB belongs

| SFN n | SFN n+1 | SFN n+2 |

FIG. 11

▨ Slot to which a PMO resource belongs  ▨ Slot to which an SSB belongs  ▤ SIB 1

| SFN n | SFN n+1 | SFN n+2 |

FIG. 12

Slot to which a PMO resource belongs    Slot to which an SSB belongs    SIB 1

| SFN n | SFN n+1 | SFN n+2 |
|---|---|---|

**FIG. 13**

Communication apparatus
1400

Processing unit 1410

Transceiver unit 1420

Storage unit 1430

**FIG. 14**

1500

1540

Transceiver 1520

Memory
1530

Instructions
1531

Processor
1510

Instructions
1511

**FIG. 15**

## INTERNATIONAL SEARCH REPORT

| International application No. |
|---|
| **PCT/CN2023/106084** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT; ENTXT; VEN; DWPI; CNKI; 3GPP: 位置, 区域, 寻呼, 检测, 监测, 监听, 对应, 映射, 机会, 资源, 下行控制信息, DCI, 同步信号块, SSB, position, location, area, paging, monitor, corresponding, map, opportunity, PMO, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115396992 A (HUAWEI TECHNOLOGIES CO., LTD.) 25 November 2022 (2022-11-25) description, paragraphs [0138]-[0285] | 1-34 |
| X | CN 114828222 A (BAICELLS TECHNOLOGIES CO., LTD.) 29 July 2022 (2022-07-29) description, paragraphs [0036]-[0343] | 1-16, 29, 30, 33, 34 |
| X | CN 111294851 A (SPREADTRUM COMMUNICATIONS (SHANGHAI) CO., LTD.) 16 June 2020 (2020-06-16) description, paragraphs [0036]-[0151] | 17-28, 31-34 |
| A | WO 2021141309 A1 (KT CORPORATION) 15 July 2021 (2021-07-15) entire document | 1-34 |
| A | WO 2021175032 A1 (OPPO GUANGDONG MOBILE TELECOMMUNICATIONS CO., LTD.) 10 September 2021 (2021-09-10) entire document | 1-34 |
| A | ERICSSON. "Extended PO and early termination for page monitoring" *3GPP TSG-RAN WG2 #107bis R2-1912644*, 18 October 2019 (2019-10-18), entire document | 1-34 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/106084**

| Patent document cited in search report | | | Publication date (day/month/year) | Patent family member(s) | | | Publication date (day/month/year) |
|---|---|---|---|---|---|---|---|
| CN | 115396992 | A | 25 November 2022 | None | | | |
| CN | 114828222 | A | 29 July 2022 | None | | | |
| CN | 111294851 | A | 16 June 2020 | None | | | |
| WO | 2021141309 | A1 | 15 July 2021 | KR | 20210090549 | A | 20 July 2021 |
| WO | 2021175032 | A1 | 10 September 2021 | WO | 2021174385 | A1 | 10 September 2021 |
| | | | | CN | 114788360 | A | 22 July 2022 |

Form PCT/ISA/210 (patent family annex) (July 2022)

## EP 4 557 838 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210963816